# EUROPEAN PATENT APPLICATION

(11) **EP 4 693 591 A1**
(43) Date of publication of application: **11.02.2026**
(21) Application number: 23939293.9
(22) Date of filing: 21.11.2023
(51) Int. Cl.: H01M 10/42, H01M 4/36, H01M 4/485, H01M 10/052

(54) **ELECTRODE MATERIAL AND PREPARATION METHOD THEREFOR, ELECTRODE SHEET AND PREPARATION METHOD THEREFOR, BATTERY AND ELECTRIC DEVICE**

(30) Priority: 31.05.2023 CN 202310628920
(71) Applicant: Contemporary Amperex Technology Co., Limited, Ningde, Fujian 352100 (CN)
(72) Inventor: FENG, Fuxiang, Ningde, Fujian 352100 (CN); ZHONG, Wei, Ningde, Fujian 352100 (CN)
(74) Representative: Lorenz Seidler Gossel Part. mbB
(86) International application number: PCT/CN2023/132829
(87) International publication number: WO 2024/244322

(57) **Abstract**

This application provides an electrode material and a preparation method thereof, an electrode plate and a preparation method thereof, a battery, and an electric apparatus. The electrode material includes a substrate and a first inorganic lithium compound layer coated on at least a portion of the surface of the substrate, where the substrate includes a pre-lithiated electrode active material; and the first inorganic lithium compound layer includes at least one of lithium oxide, lithium nitride, lithium carbonate, lithium fluoride, lithium sulfide, or lithium phosphide.

## Description

### CROSS-REFERENCE TO RELATED APPLICATIONS

This application claims priority to Chinese Patent Application No. 202310628920.7, filed on May 31, 2023 and entitled "ELECTRODE MATERIAL AND PREPARATION METHOD THEREOF, ELECTRODE PLATE AND PREPARATION METHOD THEREOF, BATTERY, AND ELECTRIC APPARATUS," which is incorporated herein by reference in its entirety.

### TECHNICAL FIELD

This application relates to an electrode material and a preparation method thereof, an electrode plate and a preparation method thereof, a battery, and an electric apparatus.

### BACKGROUND

Secondary batteries rely on the reversible insertion and extraction of active ions between the positive and negative electrodes for charging and discharging, exhibiting outstanding characteristics such as high energy density, long cycle life, no pollution, and no memory effect. Therefore, secondary batteries, as a clean energy source, have gradually expanded their application fields from electronic products to large-scale apparatuses such as electric vehicles, aligning with sustainable environmental and energy development strategies. Consequently, higher demands have been placed on the energy density and cycling performance of secondary batteries.

### SUMMARY

To achieve the above objectives, this application provides an electrode material and a preparation method thereof, an electrode plate and a preparation method thereof, a battery, and an electric apparatus. The electrode material and electrode plate, when applied to secondary batteries, can enhance the energy density and cycling performance of the battery.

According to a first aspect, embodiments of this application provide an electrode material, including: a substrate, the substrate including a pre-lithiated electrode active material; and a first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide.

Without being bound by any theory or explanation, the substrate of the electrode material in the embodiments of this application includes a pre-lithiated electrode active material. The pre-lithiated electrode active material has been pre-intercalated with a quantity of active lithium ions. During the first charge or discharge process, the pre-lithiated electrode active material may release active lithium ions, thereby compensating for the loss of active lithium ions during the battery formation process. As compared to the prior art in which a lithium metal layer is directly compounded on the surface of the negative electrode plate, the electrode material in the embodiments of this application has the advantage of more uniform lithium supplementation. In addition, the electrode material in the embodiments of this application includes a first inorganic lithium compound layer. The first inorganic lithium compound layer can isolate the substrate from contact with air, enhancing the chemical stability of the substrate and maintaining high lithium supplementation efficiency of the electrode material. Furthermore, the first inorganic lithium compound layer can form a dense, uniform, and stable protective film on the surface of the electrode plate. This protective film functions similarly to an SEI film, thereby enhancing the environmental stability of the electrode, reducing irreversible loss of active lithium ions, and mitigating capacity degradation of the secondary battery. Therefore, when applied to secondary batteries, the electrode material in the embodiments of this application can enhance the energy density and extend the cycle life of the secondary battery.

In any embodiment of this application, the first inorganic lithium compound layer includes at least two of lithium oxide, lithium nitride, lithium carbonate, lithium fluoride, or lithium sulfide.

Optionally, based on a total mass of the first inorganic lithium compound layer, the first inorganic lithium compound layer includes 18% to 90% lithium nitride, 0 to 28% lithium fluoride, 0 to 80% lithium oxide, 0 to 2% lithium carbonate, and 0 to 20% lithium sulfide.

More optionally, based on the total mass of the first inorganic lithium compound layer, the first inorganic lithium compound layer includes 70% to 90% lithium nitride, 0 to 30% lithium oxide, and 0 to 10% lithium sulfide.

The first inorganic lithium compound layer with the above composition is advantageous for protecting the substrate and suppressing side reactions between the substrate and air, thereby allowing the electrode material to maintain a high lithium supplementation efficiency. In addition, when applied to secondary batteries, the first inorganic lithium compound layer with the above composition facilitates the formation of a uniform, dense, and stable protective film on the surface of the electrode plate, thereby further improving the cycle stability of the secondary battery.

In any embodiment of this application, the thickness of the first inorganic lithium compound layer is 2 nm to 5000 nm, optionally 20 nm to 1000 nm.

The first inorganic lithium compound layer with the thickness meeting the given range can not only enhance the chemical stability of the substrate but also allow the electrode material to maintain a high substrate content, thereby significantly improving the lithium supplementation efficiency of the electrode material. In addition, the first inorganic lithium compound layer with the thickness within the above appropriate range helps enhance the environmental stability of the electrode, thereby suppressing capacity degradation and extending the cycle life of the secondary battery.

In any embodiment of this application, a volume distribution particle size Dv50 of the electrode material is 0.6 µm to 60 µm, optionally 5 µm to 15 µm. This facilitates the release of active lithium ions from the electrode material, improves the lithium supplementation efficiency of the electrode material, and consequently helps further mitigate capacity degradation and extend the cycle life of the secondary battery.

In any embodiment of this application, the electrode material is a positive electrode material, and a lithium supplementation content of the positive electrode material is 1% to 30%, optionally 5% to 20%. The lithium supplementation content of the positive electrode material is characterized by (C₁ - C₁₀)/C₁₀ × 100%, where C₁ is the actual specific capacity of the positive electrode material in mAh/g, and C₁₀ is the theoretical specific capacity of the positive electrode active material in mAh/g, thereby enabling the secondary battery to achieve both good cycling performance and high reliability.

In any embodiment of this application, the electrode material is a negative electrode material, and a lithium supplementation content of the negative electrode material is 1% to 100%, optionally 30% to 50%. The lithium supplementation content of the negative electrode material is characterized by (C₂₀ - C₂)/C₂₀ × 100%, where C₂ is the actual specific capacity of the negative electrode material in mAh/g, and C₂₀ is the theoretical specific capacity of the negative electrode active material in mAh/g, thereby enabling the secondary battery to achieve both good cycling performance and high reliability.

According to a second aspect, embodiments of this application provide a preparation method for an electrode material, including:
mixing lithium metal with a complexing agent solution to allow the lithium metal to react with the complexing agent, obtaining a liquid-phase lithiation agent;
contacting the liquid-phase lithiation agent with an electrode active material to allow the liquid-phase lithiation agent to pre-lithiate the electrode active material, obtaining a pre-lithiated electrode active material; and
contacting the pre-lithiated electrode active material with a reactant to form a first inorganic lithium compound layer on at least a portion of the surface of the pre-lithiated electrode active material, obtaining the electrode material;
where the electrode material includes: a substrate, the substrate including the pre-lithiated electrode active material; and the first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide.

The method provided in the embodiments of this application is simple to operate, proceeds in mild conditions, and easy to control. The substrate of the prepared electrode material has been pre-intercalated with a quantity of active lithium ions. During the first charge or discharge process, the electrode material may release active lithium ions, thereby compensating for the loss of active lithium ions during the battery formation process. In addition, a dense, uniform, and stable protective film can be formed on the surface of the electrode plate through the first inorganic lithium compound layer of the electrode material prepared according to the method in the embodiments of this application. This protective film functions similarly to an SEI film, enhancing the environmental stability of the electrode, reducing irreversible loss of active lithium ions, and mitigating capacity degradation of the secondary battery. Therefore, when applied to secondary batteries, the electrode material prepared in the embodiments of this application can enhance the energy density and extend the cycle life of the secondary battery.

In any embodiment of this application, the preparation method further includes:
providing the complexing agent solution by mixing the complexing agent with a solvent uniformly to obtain the complexing agent solution.

Optionally, the complexing agent includes at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups, and more optionally includes at least one of 2-methylnaphthalene, 1-naphthonitrile, 2,2-dimethylbiphenyl, 2-ethylindene, 1-methyl-3-ethylpyrene, or benzophenone.

Optionally, the solvent includes at least one of alkanes and their derivatives, aromatic hydrocarbons and their derivatives, ether compounds and their derivatives, furan compounds and their derivatives, pyran compounds and their derivatives, or esters and their derivatives, and more optionally includes at least one of benzene, toluene, xylene, ethylbenzene, ethylene glycol dimethyl ether, 2-methyltetrahydrofuran, pyran, or fluorinated ethylene carbonate.

A complexing agent selected from the above types can undergo a complexation reaction with lithium metal to form a liquid-phase lithiation agent with a low redox potential. Therefore, the liquid-phase lithiation agent more readily pre-lithiates the electrode active material by embedding active lithium ions into the electrode active material, thereby facilitating an improvement in the lithium supplementation efficiency of the electrode material. Further, the use of the above types of solvents to dissolve the complexing agent facilitates further adjustment of the redox potential of the liquid-phase lithiation agent within the appropriate range, thereby further improving the pre-lithiation efficiency and, in turn, enhancing the lithium supplementation efficiency of the electrode material.

In any embodiment of this application, a redox potential of the liquid-phase lithiation agent is 0.05 V to 1.5 V, optionally 0.1 V to 0.5 V. Therefore, the efficiency of pre-lithiation can be further enhanced, thereby enhancing the lithium supplementation efficiency of the electrode material.

In any embodiment of this application, a molar ratio of lithium metal to the complexing agent is (0.5:1) to (10:1), optionally (1:1) to (4:1).

In any embodiment of this application, a molar concentration of lithium element in the liquid-phase lithiation agent is 0.01 mol/L to 10 mol/L, optionally 0.01 mol/L to 5 mol/L.

When the molar ratio of lithium metal to the complexing agent is within the above range, not only can the reaction efficiency between lithium metal and the complexing agent be enhanced, but also the content of lithium element in the liquid-phase lithiation agent can be adjusted to an appropriate range. With the content of lithium element in the liquid-phase lithiation agent within the appropriate range, the liquid-phase lithiation agent can achieve improved pre-lithiation efficiency for the electrode active material.

In any embodiment of this application, a molar ratio of lithium element in the liquid-phase lithiation agent to the electrode active material is (0.05:1) to (10:1), optionally (0.1:1) to (5:1). Therefore, during the battery formation process, the electrode material can release an appropriate amount of active lithium ions to compensate for the active lithium ions lost during the first charge-discharge cycle.

In any embodiment of this application, a volume distribution particle size Dv50 of the electrode active material is 0.5 µm to 40 µm. This facilitates the release of active lithium ions from the electrode material, improves the lithium supplementation efficiency of the electrode material, and consequently helps further mitigate capacity degradation and extend the cycle life of the secondary battery.

In any embodiment of this application, the reactant includes at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus, and optionally includes at least one of carbon dioxide, fluorine, nitrogen, sulfur dioxide, or red phosphorus.

With an appropriate reactant selected, the composition of the first inorganic lithium compound layer can be regulated. The first inorganic lithium compound layer with a suitable composition is advantageous for suppressing side reactions between the substrate and air, maintaining high lithium supplementation efficiency of the electrode material, and regulating the composition of the protective film on the electrode surface so as to enhance the environmental stability of the electrode, thereby helping further improve the cycle stability and extend the cycle life of the secondary battery.

According to a third aspect, embodiments of this application provide an electrode plate, including a current collector and an electrode film layer located on at least one side of the current collector, where the electrode film layer includes an electrode material; and the electrode material includes: a substrate, the substrate including a pre-lithiated electrode active material; and a first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide.

The electrode plate according to the third aspect includes an electrode material, and the substrate of the electrode material has been pre-intercalated with a quantity of active lithium ions. During the first charge or discharge process, the electrode material may release active lithium ions, thereby compensating for the loss of active lithium ions during the battery formation process. In addition, a dense, uniform, and stable protective film can be formed on the surface of the electrode plate through the first inorganic lithium compound layer of the electrode material. This protective film functions similarly to an SEI film, enhancing the environmental stability of the electrode, reducing irreversible loss of active lithium ions, and mitigating capacity degradation of the secondary battery. Therefore, when applied to secondary batteries, the electrode plate in the embodiments of this application can enhance the energy density and extend the cycle life of the secondary battery.

In any embodiment of this application, the electrode plate further includes a second inorganic lithium compound layer adhered to at least a portion of the surface of the electrode film layer, the second inorganic lithium compound layer including at least one of lithium oxide, lithium nitride, lithium carbonate, lithium fluoride, lithium sulfide, or lithium phosphide.

When the electrode plate further includes a second inorganic lithium compound layer adhered to at least a portion of the surface of the electrode film layer, it is advantageous for further enhancing the environmental stability of the electrode during charge-discharge cycles, thereby contributing to improving the cycle stability of the secondary battery.

In any embodiment of this application, the first inorganic lithium compound layer includes at least two of lithium oxide, lithium nitride, lithium carbonate, lithium fluoride, or lithium sulfide.

Optionally, based on a total mass of the first inorganic lithium compound layer, the first inorganic lithium compound layer includes 18% to 90% lithium nitride, 0 to 28% lithium fluoride, 0 to 80% lithium oxide, 0 to 2% lithium carbonate, and 0 to 20% lithium sulfide.

More optionally, based on the total mass of the first inorganic lithium compound layer, the first inorganic lithium compound layer includes 70% to 90% lithium nitride, 0 to 30% lithium oxide, and 0 to 10% lithium sulfide.

The first inorganic lithium compound layer with the above composition is advantageous for protecting the substrate and suppressing side reactions between the substrate and air, thereby allowing the electrode material to maintain a high lithium supplementation efficiency. In addition, the first inorganic lithium compound layer with the above composition facilitates the formation of a uniform, dense, and stable protective film on the surface of the electrode plate, thereby further improving the cycle stability of the secondary battery.

According to a fourth aspect, embodiments of this application provide a preparation method for an electrode plate, including Method A or Method B.

Method A
mixing lithium metal with a complexing agent solution to allow the lithium metal to react with the complexing agent, obtaining a liquid-phase lithiation agent;
contacting the liquid-phase lithiation agent with an electrode active material to allow the liquid-phase lithiation agent to pre-lithiate the electrode active material, obtaining a pre-lithiated electrode active material;
contacting the pre-lithiated electrode active material with a reactant to form a first inorganic lithium compound layer on at least a portion of the surface of the pre-lithiated electrode active material, obtaining the electrode material; where the electrode material includes: a substrate, the substrate including the pre-lithiated electrode active material; and a first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide; and
preparing an electrode plate including the electrode material.

Method B
providing an initial electrode plate, the initial electrode plate including a current collector and an electrode film layer located on at least one side of the current collector, the electrode film layer including an electrode active material;
mixing lithium metal with a complexing agent solution to allow the lithium metal to react with the complexing agent, obtaining a liquid-phase lithiation agent;
contacting the liquid-phase lithiation agent with the electrode film layer to allow the liquid-phase lithiation agent to pre-lithiate the electrode active material, obtaining an electrode plate including the pre-lithiated electrode active material;
contacting the electrode plate including the pre-lithiated electrode active material with a reactant to form a first inorganic lithium compound layer on the surface of the pre-lithiated electrode active material, obtaining an electrode plate including the electrode material;
where the electrode material includes: a substrate, the substrate including the pre-lithiated electrode active material; and a first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide.

The electrode plate prepared according to Method A or Method B includes an electrode material, and the substrate of the electrode material has been pre-intercalated with a quantity of active lithium ions. During the first charge or discharge process, the electrode material can release active lithium ions, thereby compensating for the loss of active lithium ions during the battery formation process. In addition, a dense, uniform, and stable protective film can be formed on the surface of the electrode plate through the first inorganic lithium compound layer of the electrode material. This protective film functions similarly to an SEI film, enhancing the environmental stability of the electrode, reducing irreversible loss of active lithium ions, and mitigating capacity degradation of the secondary battery. Thus, when applied to secondary batteries, the electrode plate prepared in the embodiments of this application can enhance the energy density and extend the cycle life of the secondary battery.

In any embodiment of this application, Method A and/or Method B further includes:
providing the complexing agent solution by mixing the complexing agent with a solvent uniformly to obtain the complexing agent solution.

Optionally, the complexing agent includes at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups, and more optionally includes at least one of 2-methylnaphthalene, 1-naphthonitrile, 2,2-dimethylbiphenyl, 2-ethylindene, 1-methyl-3-ethylpyrene, or benzophenone.

Optionally, the solvent includes at least one of alkanes and their derivatives, aromatic hydrocarbons and their derivatives, ether compounds and their derivatives, furan compounds and their derivatives, pyran compounds and their derivatives, or esters and their derivatives, and more optionally includes at least one of benzene, toluene, xylene, ethylbenzene, ethylene glycol dimethyl ether, 2-methyltetrahydrofuran, pyran, or fluorinated ethylene carbonate.

A complexing agent selected from the above types can undergo a complexation reaction with lithium metal to form a liquid-phase lithiation agent with a low redox potential. Therefore, the liquid-phase lithiation agent more readily pre-lithiates the electrode active material by embedding active lithium ions into the electrode active material, thereby facilitating an improvement in the lithium supplementation efficiency of the electrode material. Further, the use of the above types of solvents to dissolve the complexing agent facilitates further adjustment of the redox potential of the liquid-phase lithiation agent within the appropriate range, thereby further improving the pre-lithiation efficiency and, in turn, enhancing the lithium supplementation efficiency of the electrode plate.

In any embodiment of this application, in Method A and/or Method B, a redox potential of the liquid-phase lithiation agent is 0.05 V to 1.5 V, optionally 0.1 V to 0.5 V. Therefore, the efficiency of pre-lithiation can be further enhanced, thereby enhancing the lithium supplementation efficiency of the electrode plate.

In any embodiment of this application, in Method A and/or Method B, a molar ratio of lithium metal to the complexing agent is (0.5:1) to (10:1), optionally (1:1) to (4:1).

In any embodiment of this application, in Method A and/or Method B, a molar concentration of lithium element in the liquid-phase lithiation agent is 0.01 mol/L to 10 mol/L, optionally 0.01 mol/L to 5 mol/L.

When the molar ratio of lithium metal to the complexing agent is within the above range, not only can the reaction efficiency between lithium metal and the complexing agent be enhanced, but also the content of lithium element in the liquid-phase lithiation agent can be adjusted to an appropriate range. With the content of lithium element in the liquid-phase lithiation agent within the appropriate range, the liquid-phase lithiation agent can achieve improved pre-lithiation efficiency for the electrode active material, thereby improving the lithium supplementation efficiency of the electrode plate.

In any embodiment of this application, in Method A and/or Method B, a molar ratio of lithium element in the liquid-phase lithiation agent to the electrode active material is (0.05:1) to (10:1), optionally (0.1:1) to (5:1). Therefore, during the battery formation process, the electrode material can release an appropriate amount of active lithium ions to compensate for the active lithium ions lost during the first charge-discharge cycle.

In any embodiment of this application, in Method A and/or Method B, a volume distribution particle size Dv50 of the electrode active material is 0.5 µm to 40 µm. This facilitates the release of active lithium ions from the electrode material, improves the lithium supplementation efficiency of the electrode plate, and consequently helps further mitigate capacity degradation and extend the cycle life of the secondary battery.

In any embodiment of this application, in Method A and/or Method B, the reactant includes at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus, and optionally includes at least one of carbon dioxide, fluorine, nitrogen, sulfur dioxide, or red phosphorus.

With an appropriate reactant selected, the composition of the first inorganic lithium compound layer can be regulated. The first inorganic lithium compound layer with a suitable composition is advantageous for suppressing side reactions between the substrate and air, maintaining high lithium supplementation efficiency of the electrode material, and regulating the composition of the protective film on the electrode surface so as to enhance the environmental stability of the electrode, thereby helping further improve the cycle stability and extend the cycle life of the secondary battery.

According to a fifth aspect, embodiments of this application provide a battery, including at least one of the electrode material according to the first aspect, an electrode material prepared by the preparation method according to the second aspect, the electrode plate according to the third aspect, or an electrode plate prepared by the preparation method according to the fourth aspect, thereby enabling the battery to achieve both high energy density and long cycle life.

According to a sixth aspect, embodiments of this application provide an electric apparatus, including the battery according to the fifth aspect.

The electric apparatus of embodiments of this application includes the battery provided in the embodiments of this application, thus having at least the same advantages as the battery.

### DESCRIPTION OF DRAWINGS

FIG. 1 is a schematic diagram of an embodiment of a battery cell of this application.
FIG. 2 is an exploded view of the embodiment of the battery cell shown in FIG. 1.
FIG. 3 is a schematic diagram of an embodiment of a battery module of this application.
FIG. 4 is a schematic diagram of an embodiment of a battery pack of this application.
FIG. 5 is an exploded view of the embodiment of the battery pack shown in FIG. 4.
FIG. 6 is a schematic diagram of an electric apparatus using the battery of this application as a power source.
1 Battery pack; 2 Upper enclosure; 3 Lower enclosure; 4 Battery module; 5 Battery cell; 51 Housing; 52 Electrode assembly; 53 Cover plate.

### DETAILED DESCRIPTION

Hereinafter, embodiments that specifically disclose an electrode material and a preparation method thereof, an electrode plate and a preparation method thereof, a battery, and an electric apparatus of this application are described in detail with reference to the drawings as appropriate. However, there may be cases in which unnecessary detailed descriptions are omitted. For example, detailed descriptions of well-known matters or repetitive descriptions of substantially identical structures may be omitted to avoid unnecessarily lengthy descriptions and facilitate understanding by those skilled in the art. In addition, the drawings and the following description are provided to enable those skilled in the art to fully understand this application and are not intended to limit the subject matter recited in the claims.

The "ranges" disclosed in this application are defined in the form of lower and upper limits, where a given range is defined by selecting a lower limit and an upper limit, and the selected lower and upper limits define the boundaries of a specific range. Ranges defined in this manner may include or exclude the endpoints and may be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. In addition, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any combination of real numbers between a and b, where a and b are real numbers. For example, the numerical range "0-5" indicates that all real numbers between "0-5" have been listed herein, and "0-5" is merely an abbreviated representation of these numerical combinations. In addition, when a parameter is expressed as an integer ≥2, it is equivalent to disclosing that the parameter is, for example, the integer 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps in this application can be performed sequentially or randomly, preferably sequentially. For example, the method including steps (a) and (b) means that the method may include steps (a) and (b) performed sequentially, or steps (b) and (a) performed sequentially. For example, mentioning that the method may further include step (c) means that step (c) can be added to the method in any order, such as including steps (a), (b), and (c), or steps (a), (c), and (b), or steps (c), (a), and (b), or the like.

Unless otherwise specified, the terms "including" and "containing" in this application indicate an open-ended or closed-ended scope. For example, "including" and "containing" may indicate that other components not listed may also be included or contained, or only the listed components may be included or contained.

Unless otherwise specified, the term "or" in this application is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

In this application, a derivative generally refers to a product derived by substituting a hydrogen atom or an atomic group in a polymer with another atom or atomic group.

With the application and promotion of secondary batteries in various electronic products and new energy vehicles, higher demands have been placed on the energy density and cycling performance of secondary batteries.

During the first charge of a secondary battery, a solid electrolyte interphase (solid electrolyte interface, SEI) film inevitably forms on the surface of the negative electrode active material, causing irreversible consumption of active ions, which leads to irreversible capacity loss in the secondary battery. In addition, during charge-discharge cycles, the SEI film may rupture due to the expansion of the negative electrode active material, requiring continuous consumption of active lithium ions to form a new SEI film, further exacerbating the capacity degradation of the battery, resulting in reduced energy density and shortened cycle life.

To address this, this application provides an electrode material and a preparation method thereof, where the electrode material can effectively compensate for the consumed active lithium ions. This application also provides an electrode plate containing the electrode material and a preparation method thereof, as well as a battery and an electric apparatus.

### Electrode Material

According to a first aspect, embodiments of this application propose an electrode material, including a substrate and a first inorganic lithium compound layer. The first inorganic lithium compound layer is coated on at least a portion of the surface of the substrate. The substrate includes a pre-lithiated electrode active material, and the first inorganic lithium compound layer includes at least one of lithium oxide, lithium nitride, lithium carbonate, lithium fluoride, lithium sulfide, or lithium phosphide.

Without being bound by any theory or explanation, the substrate of the electrode material in the embodiments of this application includes a pre-lithiated electrode active material. The pre-lithiated electrode active material has been pre-intercalated with a quantity of active lithium ions. During the first charge or discharge process, the pre-lithiated electrode active material may release active lithium ions, thereby compensating for the loss of active lithium ions during the battery formation process. As compared to the prior art in which a lithium metal layer is directly compounded on the surface of the negative electrode plate, the electrode material in the embodiments of this application has the advantage of more uniform lithium supplementation. In addition, the electrode material in the embodiments of this application includes a first inorganic lithium compound layer. The first inorganic lithium compound layer can isolate the substrate from contact with air, improving the chemical stability of the substrate and maintaining high lithium supplementation efficiency of the electrode material. Furthermore, the first inorganic lithium compound layer can form a dense, uniform, and stable protective film on the surface of the electrode plate. This protective film functions similarly to an SEI film, thereby enhancing the environmental stability of the electrode, reducing irreversible loss of active lithium ions, and mitigating capacity degradation of the secondary battery. Therefore, when applied to secondary batteries, the electrode material in the embodiments of this application can enhance the energy density and extend the cycle life of the secondary battery.

The pre-lithiated electrode active material has the meaning well known in the art, and indicates an electrode active material with pre-intercalated active lithium ions. The electrode active material may include electrode active materials known in the art that have not undergone pre-lithiation treatment, and the specific types of electrode active materials are not limited in this application. In an example, the electrode active material may include at least one positive electrode active material known in the art or at least one negative electrode active material known in the art.

The types of positive electrode active materials are not specifically limited and positive electrode active materials well known in the art may be used for secondary batteries. For example, the positive electrode active material may include at least one of the following positive electrode active materials: lithium transition metal oxides, lithium-containing phosphates with an olivine structure, and their respective modified compounds. Examples of lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of lithium-containing phosphates with an olivine structure may include, but are not limited to, at least one of lithium iron phosphate, lithium iron phosphate-carbon composites, lithium manganese phosphate, lithium manganese phosphate-carbon composites, lithium manganese iron phosphate, lithium manganese iron phosphate-carbon composites, and their respective modified compounds. The embodiments of this application are not limited to these materials, and other conventionally well-known materials that can be used as positive electrode active materials for secondary batteries may also be used. One of these positive electrode active materials may be used alone, or two or more of them may be used in combination.

Optionally, in some embodiments, the positive electrode active material may include at least one of the following positive electrode active materials: lithium iron phosphate, nickel-cobalt-manganese ternary material, cobalt-free positive electrode material, lithium manganese iron phosphate, or lithium manganate.

The types of negative electrode active materials are not specifically limited and negative electrode active materials well known in the art may be used for secondary batteries. In an example, the negative electrode active material may include at least one of the following negative electrode active materials: graphite, soft carbon, hard carbon, mesocarbon microbeads, silicon-based materials, tin-based materials, or lithium titanate. Silicon-based materials may include one or more of elemental silicon, silicon oxide, silicon-carbon composites, silicon-nitrogen composites, or silicon alloy materials. Tin-based materials may include one or more of elemental tin, tin oxide, or tin alloy materials. This application is not limited to these materials, and other conventionally well-known materials that can be used as negative electrode active materials for secondary batteries may also be used. One of these negative electrode active materials may be used alone, or two or more of them may be used in combination.

Optionally, in some embodiments, the negative electrode active material may include at least one of the following negative electrode active materials: artificial graphite, natural graphite, soft carbon, hard carbon, silicon-based materials, tin-based materials, phosphorus-based materials, or lithium titanate.

In some embodiments, based on a total mass of the first inorganic lithium compound layer, the first inorganic lithium compound layer may include 0 to 80% lithium oxide, 0 to 100% lithium carbonate, 0 to 100% lithium fluoride, 0 to 45% lithium phosphide, 0 to 90% lithium nitride, and 0 to 55% lithium sulfide.

Optionally, in some embodiments, based on the total mass of the first inorganic lithium compound layer, the first inorganic lithium compound layer may include 0 to 100% lithium fluoride, 0 to 80% lithium oxide, 0 to 50% lithium nitride, 0 to 100% lithium carbonate, and 0 to 55% lithium sulfide.

In some embodiments, the first inorganic lithium compound layer may include at least two of lithium oxide, lithium nitride, lithium carbonate, lithium fluoride, or lithium sulfide.

Optionally, in some embodiments, based on the total mass of the first inorganic lithium compound layer, the first inorganic lithium compound layer may include 18% to 90% lithium nitride, 0 to 28% lithium fluoride, 0 to 80% lithium oxide, 0 to 2% lithium carbonate, and 0 to 20% lithium sulfide.

More optionally, in some embodiments, based on the total mass of the first inorganic lithium compound layer, the first inorganic lithium compound layer may include 70% to 90% lithium nitride, 0 to 30% lithium oxide, and 0 to 10% lithium sulfide.

The first inorganic lithium compound layer with the above composition is advantageous for protecting the substrate and suppressing side reactions between the substrate and air, thereby allowing the electrode material to maintain a high lithium supplementation efficiency. In addition, when applied to secondary batteries, the first inorganic lithium compound layer with the above composition facilitates the formation of a uniform, dense, and stable protective film on the surface of the electrode plate, further improving the cycle stability of the secondary battery.

The composition of the first inorganic lithium compound layer can be determined using methods and devices known in the art. In an example, the content of each element (for example, O, N, P, S, F, C, and Li) in the first inorganic lithium compound layer can be measured using X-ray photoelectron spectroscopy (XPS), and the composition and content of each component in the first inorganic lithium compound layer can be determined based on a proportion of the content of each element and the chemical formula of the inorganic lithium compound. In another example, in sampling from a battery, the composition of the first inorganic lithium compound layer may alternatively be determined through the following steps: disassembling the battery and removing the electrode plate; soaking the electrode plate in an organic solvent to remove the electrolyte solution and additives from the electrode plate; drying the electrode plate, randomly selecting a region subjected to cross-sectioning, and identifying a location of the first inorganic lithium compound layer using a scanning electron microscope (SEM) at a magnification of 3000 times or higher (for example, 3000 times, 10000 times, or 100000 times), marking the location with the first inorganic lithium compound layer in the field of view as a target region; subsequently, at a magnification of 500 times or higher (for example, 500 times or 1000 times), selecting a region of a certain size (for example, a region of 100 µm* 100 µm at a magnification of 500 times, or a region of 10 µm*10 µm at a magnification of 1000 times) for EDS mapping for 2 minutes to obtain the types and contents of elements in the target region, and determining the composition of the first inorganic lithium compound layer based on the proportion of the content of each element and the chemical formula of the inorganic lithium compound.

In some embodiments, the thickness of the first inorganic lithium compound layer may be 2 nm to 5000 nm, for example, 2 nm, 5 nm, 10 nm, 50 nm, 100 nm, 300 nm, 500 nm, 1000 nm, 2000 nm, 3000 nm, 4000 nm, 5000 nm, or a range defined by any two of these values. For example, the thickness of the first inorganic lithium compound layer may be 2 nm to 5000 nm, 2 nm to 4000 nm, 2 nm to 3000 nm, 2 nm to 2000 nm, 2 nm to 1000 nm, 5 nm to 5000 nm, 5 nm to 3000 nm, 5 nm to 1000 nm, 5 nm to 500 nm, 5 nm to 300 nm, 10 nm to 4000 nm, 10 nm to 2000 nm, 10 nm to 500 nm, 50 nm to 5000 nm, 50 nm to 3000 nm, 50 nm to 1000 nm, 50 nm to 500 nm, or the like.

Optionally, in some embodiments, the thickness of the first inorganic lithium compound layer may alternatively be 20 nm to 1000 nm, for example, 20 nm, 50 nm, 100 nm, 300 nm, 500 nm, 800 nm, 1000 nm, or a range defined by any two of these values. For example, the thickness of the first inorganic lithium compound layer may be 20 nm to 1000 nm, 20 nm to 800 nm, 20 nm to 500 nm, 20 nm to 300 nm, 20 nm to 100 nm, 20 nm to 50 nm, 50 nm to 1000 nm, 50 nm to 800 nm, 50 nm to 500 nm, 50 nm to 300 nm, 50 nm to 100 nm, 100 nm to 1000 nm, 100 nm to 800 nm, 100 nm to 500 nm, 100 nm to 300 nm, 300 nm to 1000 nm, 500 nm to 1000 nm, or the like.

Without being bound by any theory or explanation, the first inorganic lithium compound layer with the thickness within the above appropriate range can effectively isolate the substrate from direct contact with air, thereby enhancing the chemical stability of the substrate, while also allowing the electrode material to maintain a high substrate content, thereby significantly enhancing the lithium supplementation efficiency of the electrode material. In addition, the first inorganic lithium compound layer with the thickness within the above appropriate range helps form a dense, uniform, and stable protective film on the surface of the electrode plate, further enhancing the environmental stability of the electrode, and thereby suppressing capacity degradation and extending the cycle life of the secondary battery.

The thickness of the first inorganic lithium compound layer has the meaning well known in the art and can be measured using devices and methods known in the art. For example, the thickness of the first inorganic lithium compound layer on the surface of the lithiated material can be observed using a transmission electron microscope (TEM) or a scanning electron microscope (SEM).

In some embodiments, a volume distribution particle size Dv50 of the electrode material may be 0.6 µm to 60 µm, for example, 0.6 µm, 1 µm, 5 µm, 10 µm, 15 µm, 20 µm, 25 µm, 30 µm, 35 µm, 40 µm, 45 µm, 50 µm, 55 µm, 60 µm, or a range defined by any two of these values. For example, the volume distribution particle size Dv50 of the electrode material may be 0.6 µm to 60 µm, 0.6 µm to 30 µm, 0.6 µm to 10 µm, 0.6 µm to 5 µm, 1 µm to 50 µm, 1 µm to 40 µm, 1 µm to 20 µm, 5 µm to 55 µm, 5 µm to 45 µm, 5 µm to 35 µm, 5 µm to 25 µm, 5 µm to 15 µm, or the like.

Optionally, in some embodiments, the volume distribution particle size Dv50 of the electrode material may also be 5 µm to 15 µm, for example, 5 µm, 6 µm, 7 µm, 8 µm, 9 µm, 10 µm, 11 µm, 12 µm, 13 µm, 14 µm, 15 µm, or a range defined by any two of these values.

Without being bound by any theory or explanation, when a volume distribution particle size Dv50 of the electrode material is within the above appropriate range, the electrode material not only provides appropriate lithium ion transport pathways but also exhibits good electrolyte solution wettability. This facilitates the release of active lithium ions from the electrode material, improves the lithium supplementation efficiency of the electrode material, and consequently helps further mitigate capacity degradation and extend the cycle life of the secondary battery.

The volume distribution particle size Dv50 of the electrode material has the meaning well known in the art, and indicates a particle size corresponding to a cumulative particle size distribution of the electrode material reaching 50% in a volume-based particle size distribution. The volume distribution particle size Dv50 can be measured using devices and methods known in the art. For example, with reference to GB/T 19077-2016 Particle Size Distribution Laser Diffraction Method, a laser particle size analyzer (for example, Malvern Master Size 3000) may be used for measurement.

In some embodiments, the electrode material is a positive electrode material. The positive electrode material may refer to an electrode material in which the substrate includes a pre-lithiated positive electrode active material.

A lithium supplementation content of the positive electrode material may be 1% to 30%, for example, 1%, 5%, 10%, 15%, 20%, 25%, 30%, or a range defined by any two of these values.

Optionally, in some embodiments, the lithium supplementation content of the positive electrode material may alternatively be 5% to 20%, for example, 5%, 8%, 10%, 12%, 15%, 18%, 20%, or a range defined by any two of these values.

The lithium supplementation content of the positive electrode material may be characterized by (C₁ - C₁₀)/C₁₀ × 100%, where C₁ is the actual specific capacity of the positive electrode material in mAh/g, and C₁₀ is the theoretical specific capacity of the positive electrode active material in mAh/g.

The actual specific capacity C₁ of the positive electrode material has the meaning well known in the art, and indicates the ratio of the actual dischargeable capacity of the positive electrode material to the mass of the positive electrode material.

The theoretical specific capacity C₁₀ of the positive electrode active material has the meaning well known in the art, and indicates the ratio of the theoretical dischargeable capacity of the positive electrode active material to the mass of the positive electrode active material. The positive electrode active material corresponds to the positive electrode material. For example, when the positive electrode active material is lithium iron phosphate, the positive electrode material includes pre-lithiated lithium iron phosphate and a first inorganic lithium compound layer coated on at least a portion of the surface of the pre-lithiated lithium iron phosphate; and when the positive electrode active material is a nickel-cobalt-manganese ternary material, the positive electrode material includes a pre-lithiated nickel-cobalt-manganese ternary material and a first inorganic lithium compound layer coated on at least a portion of the surface of the pre-lithiated nickel-cobalt-manganese ternary material.

Without being bound by any theory or explanation, when the positive electrode material has an appropriate lithium supplementation content, the positive electrode applied to a secondary battery can release an appropriate amount of active lithium ions to compensate for the loss of active lithium ions during the first charge-discharge cycle, while reducing the risk of lithium precipitation due to excessive lithium supplementation. Therefore, when applied to secondary batteries, the positive electrode material enables the secondary batteries to achieve both good cycling performance and high reliability.

The lithium supplementation content of the positive electrode material may be measured using methods and devices known in the art. The actual specific capacity C₁ of the positive electrode material may be measured using devices and methods known in the art. Those skilled in the art can determine the theoretical specific capacity C₁₀ of the positive electrode active material based on the type and chemical composition of the positive electrode active material.

In an example, C₁ may be determined by measuring the capacity of lithium that can be released from the positive electrode material. Specifically, the positive electrode material may be mixed with an appropriate amount of conductive agent and binder in a certain ratio to prepare a single-sided coated positive electrode plate; a button lithium half-cell is used for directly charging to a rated voltage to measure the releasable lithium capacity C (mAh) of the positive electrode plate containing m₁ g of positive electrode material, and the actual specific capacity C₁ of the positive electrode material can then be calculated according to the formula C₁ = C/m₁. The rated voltage has the meaning well known in the art, and indicates a rated voltage corresponding to the substrate of the positive electrode material. For example, when the substrate is pre-lithiated lithium iron phosphate, the rated voltage may be 3.8 V; and when the substrate is a pre-lithiated nickel-cobalt-manganese ternary material, the rated voltage may be 4.2 V to 4.4 V.

In some embodiments, the electrode material is a negative electrode material. The negative electrode material may refer to an electrode material in which the substrate includes a pre-lithiated negative electrode active material.

The lithium supplementation content of the negative electrode material may be 1% to 100%, for example, 1%, 5%, 10%, 15%, 20%, 25%, 30%, 35%, 40%, 45%, 50%, 80%, 100%, or a range defined by any two of these values.

Optionally, in some embodiments, the lithium supplementation content of the negative electrode material may also be 30% to 50%, for example, 30%, 32%, 35%, 38%, 40%, 42%, 45%, 48%, 50%, or a range defined by any two of these values.

The lithium supplementation content of the negative electrode material may be characterized by (C₂₀ - C₂)/C₂₀ × 100%, where C₂ is the actual specific capacity of the negative electrode material in mAh/g, and C₂₀ is the theoretical specific capacity of the negative electrode active material in mAh/g.

The actual specific capacity C₂ of the negative electrode material has the meaning well known in the art, and indicates the ratio of the actual dischargeable capacity of the negative electrode material to the mass of the negative electrode material.

The theoretical specific capacity C₂₀ of the negative electrode active material has the meaning well known in the art, and indicates the ratio of the theoretical dischargeable capacity of the negative electrode active material to the mass of the negative electrode active material. The negative electrode active material corresponds to the negative electrode material. For example, when the negative electrode active material is graphite, the negative electrode material includes pre-lithiated graphite and a first inorganic lithium compound layer coated on at least a portion of the surface of the pre-lithiated graphite; and when the negative electrode active material is lithium titanate, the negative electrode material includes pre-lithiated lithium titanate and a first inorganic lithium compound layer coated on at least a portion of the surface of the pre-lithiated lithium titanate.

Without being bound by any theory or explanation, when the negative electrode material has an appropriate lithium supplementation content, the negative electrode applied to a secondary battery can release an appropriate amount of active lithium ions to compensate for the loss of active lithium ions during the first charge-discharge cycle, while reducing the risk of lithium precipitation due to excessive lithium supplementation. Therefore, when applied to secondary batteries, the negative electrode material enables the secondary batteries to achieve both good cycling performance and high reliability.

The lithium supplementation content of the negative electrode material may be measured using methods and devices known in the art. The actual specific capacity C₂ of the negative electrode material may be measured using devices and methods known in the art. Those skilled in the art can determine the theoretical specific capacity C₂₀ of the negative electrode active material based on the type and chemical composition of the negative electrode active material.

In an example, C₂ may be determined by measuring the lithium intercalation capacity of the negative electrode material. Specifically, the negative electrode material may be mixed with an appropriate amount of conductive agent and binder in a certain ratio to prepare a single-sided coated negative electrode plate; a button lithium half-cell is used for discharging to a preset voltage to measure the lithium intercalation capacity C' (mAh) of the negative electrode plate containing m₂ g of negative electrode material, and the actual specific capacity C₂ of the negative electrode material can then be calculated according to the formula C₂ = C'/m₂. The preset voltage refers to a discharge voltage required for the negative electrode active material corresponding to the substrate of the negative electrode material to reach a fully lithiated state. For example, the preset voltage may be 0.01 V for graphite, soft carbon, hard carbon, mesocarbon microbeads, silicon-based materials, or tin-based materials, and 2.0 V for lithium titanate.

### Preparation method for electrode material

According to a second aspect, embodiments of this application provide a preparation method for an electrode material, including the following steps S110 to S130.

S110: Mixing lithium metal with a complexing agent solution to allow the lithium metal to react with the complexing agent, obtaining a liquid-phase lithiation agent.

In step S110, the lithium metal may be in any form, for example, including at least one of lithium blocks, lithium foils, or lithium powder, which is not limited herein. The complexing agent may include reagents well known in the art that are capable of undergoing a complexation reaction with lithium metal, and those skilled in the art can select as needed, which is not limited herein. In some embodiments, the mixing the lithium metal with the complexing agent solution may include mixing the lithium metal with the complexing agent and stirring uniformly. The stirring temperature and time are not specifically limited, and those skilled in the art can adjust as needed. In an example, the stirring temperature may be 0°C to 60°C, optionally 10°C to 40°C, and the stirring time may be 0.1 h to 12 h, optionally 1 h to 6 h.

S120: Contacting the liquid-phase lithiation agent with an electrode active material to allow the liquid-phase lithiation agent to pre-lithiate the electrode active material, obtaining a pre-lithiated electrode active material.

In step S120, the contact between the liquid-phase lithiation agent and the electrode active material can be achieved in various ways, and this is not limited in this application. In some embodiments, the electrode active material can be immersed in the liquid-phase lithiation agent to pre-lithiate the electrode active material. The temperature and time for prelithiating the electrode active material using a liquid-phase lithiating agent in step S120 are not specifically limited, and those skilled in the art can adjust as needed. In an example, the pre-lithiation temperature may be 0°C to 80°C, optionally 10°C to 50°C, and the pre-lithiation time may be 1 min to 6 h, optionally 5 min to 30 min.

S130: Contacting the pre-lithiated electrode active material with a reactant to form a first inorganic lithium compound layer on at least a portion of the surface of the pre-lithiated electrode active material, obtaining the electrode material.

In step S130, the reactant may be a substance capable of reacting with the liquid-phase lithiation agent or the pre-lithiated electrode active material to form at least one of lithium oxide, lithium nitride, lithium carbonate, lithium fluoride, lithium sulfide, or lithium phosphide, and those skilled in the art can select as needed. After the pre-lithiated electrode active material contacts the reactant, the reactant may react with the residual liquid-phase lithiation agent on at least a portion of the surface of the pre-lithiated electrode active material to form the first inorganic lithium compound layer on at least a portion of the surface of the pre-lithiated electrode active material; and/or the reactant may react with the surface material of the pre-lithiated electrode active material to form the first inorganic lithium compound layer on at least a portion of the surface of the pre-lithiated electrode active material. The reaction temperature and time in step S130 are not specifically limited, and those skilled in the art can adjust as needed. In an example, the reaction temperature in step S130 may be 0°C to 80°C, optionally 10°C to 50°C, and the reaction time may be 1 min to 60 min, optionally 2 min to 10 min.

The electrode material prepared according to steps S110 to S130 includes a substrate and a first inorganic lithium compound layer. The first inorganic lithium compound layer is coated on at least a portion of the surface of the substrate, the substrate includes the pre-lithiated electrode active material, and the first inorganic lithium compound layer includes at least one of lithium oxide, lithium nitride, lithium carbonate, lithium fluoride, lithium sulfide, or lithium phosphide.

The method provided in the embodiments of this application is simple to operate, proceeds in mild conditions, and easy to control. The substrate of the prepared electrode material has been pre-intercalated with a quantity of active lithium ions. During the first charge or discharge process, the electrode material may release active lithium ions, thereby compensating for the loss of active lithium ions during the battery formation process. In addition, a dense, uniform, and stable protective film can be formed on the surface of the electrode plate through the first inorganic lithium compound layer of the electrode material prepared according to the method in the embodiments of this application. This protective film functions similarly to an SEI film, enhancing the environmental stability of the electrode, reducing irreversible loss of active lithium ions, and mitigating capacity degradation of the secondary battery. Thus, when applied to secondary batteries, the electrode material prepared in the embodiments of this application can enhance the energy density and extend the cycle life of the secondary battery.

In some embodiments, the preparation method may further include: providing the complexing agent solution by mixing the complexing agent with a solvent uniformly to obtain the complexing agent solution.

In some embodiments, the complexing agent may include at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups. Optionally, in some embodiments, the complexing agent may include at least one of 2-methylnaphthalene, 1-naphthonitrile, 2,2-dimethylbiphenyl, 2-ethylindene, 1-methyl-3-ethylpyrene, benzophenone, pyridine, or quinoline.

In some embodiments, the solvent may include at least one of alkanes and their derivatives, aromatic hydrocarbons and their derivatives, ether compounds and their derivatives, furan compounds and their derivatives, pyran compounds and their derivatives, or esters and their derivatives. Optionally, the solvent may include at least one of benzene, toluene, xylene, ethylbenzene, ethylene glycol dimethyl ether, 2-methyltetrahydrofuran, pyran, or fluorinated ethylene carbonate.

Without being bound by any theory or explanation, a complexing agent selected from the above types can undergo a complexation reaction with lithium metal to form a liquid-phase lithiation agent with a low redox potential. Therefore, the liquid-phase lithiation agent more readily pre-lithiates the electrode active material by embedding active lithium ions into the electrode active material, thereby facilitating an improvement in the lithium supplementation efficiency of the electrode material. Further, the use of the above types of solvents to dissolve the complexing agent facilitates further adjustment of the redox potential of the liquid-phase lithiation agent within the appropriate range, thereby further improving the pre-lithiation efficiency and, in turn, enhancing the lithium supplementation efficiency of the electrode material.

In some embodiments, the redox potential of the liquid-phase lithiation agent may be 0.05 V to 1.5 V, for example, 0.05 V, 0.10 V, 0.20 V, 0.30 V, 0.40 V, 0.50 V, 0.60 V, 0.70 V, 0.80 V, 0.90 V, 1.0 V, 1.5 V, or a range defined by any two of these values.

Optionally, in some embodiments, the redox potential of the liquid-phase lithiation agent may alternatively be 0.1 V to 0.5 V, 0.1 V to 0.4 V, 0.1 V to 0.3 V, 0.1 V to 0.2 V, 0.2 V to 0.5 V, 0.2 V to 0.4 V, 0.2 V to 0.3 V, 0.3 V to 0.5 V, 0.3 V to 0.4 V, 0.4 V to 0.5 V, or the like.

When the redox potential of the liquid-phase lithiation agent is within the above appropriate range, the efficiency of pre-lithiation can be further enhanced, thereby improving the lithium supplementation efficiency of the electrode material.

The redox potential of the liquid-phase lithiation agent has the meaning well known in the art and can be measured using devices and methods known in the art, for example, by cyclic voltammetry. Specifically, Pt may be used as the working electrode, Li as both the reference electrode and the counter electrode, and together with the liquid-phase lithiation agent form an electrolytic cell. The potential is scanned from the open-circuit voltage to 0.01 V, followed by three cycles between 0.01 V and 1.5 V, thereby obtaining the redox peaks of the liquid-phase lithiation agent and measuring its redox potential.

In some embodiments, a molar ratio of lithium metal to the complexing agent may be (0.5:1) to (10:1), for example, 0.5:1, 1:1, 2:1, 3:1, 4:1, 5:1, 6:1, 7:1, 8:1, 9:1, 10:1, or a range composed of any two of these ratios. Optionally, the molar ratio of lithium metal to the complexing agent may be (1:1) to (4:1), (1:1) to (3.5:1), (1:1) to (3:1), (1:1) to (2.5:1), (1:1) to (2:1), (1:1) to (1.5:1), or the like.

In some embodiments, the content of lithium element in the liquid-phase lithiation agent may be 0.01 mol/L to 10 mol/L, for example, 0.01 mol/L, 0.1 mol/L, 0.5 mol/L, 1 mol/L, 2 mol/L, 5 mol/L, 8 mol/L, 10 mol/L, or a range defined by any two of these values. Optionally, the content of lithium element in the liquid-phase lithiation agent may alternatively be 0.01 mol/L to 5 mol/L, 0.01 mol/L to 4 mol/L, 0.01 mol/L to 3 mol/L, 0.01 mol/L to 2 mol/L, 0.01 mol/L to 1 mol/L, 0.5 mol/L to 5 mol/L, 0.5 mol/L to 3 mol/L, 0.5 mol/L to 1 mol/L, 1 mol/L to 5 mol/L, 2 mol/L to 4 mol/L, or the like.

Without being bound by any theory or explanation, when the molar ratio of lithium metal to the complexing agent is within the above range, not only can the reaction efficiency between lithium metal and the complexing agent be enhanced, but also the content of lithium element in the liquid-phase lithiation agent can be adjusted to an appropriate range. With the content of lithium element in the liquid-phase lithiation agent within the appropriate range, the liquid-phase lithiation agent can achieve improved pre-lithiation efficiency for the electrode active material.

In some embodiments, the molar ratio of lithium element in the liquid-phase lithiation agent to the electrode active material may be (0.05:1) to (10:1), optionally (0.1:1) to (5:1).

Without being bound by any theory or explanation, when the molar ratio of lithium element in the liquid-phase lithiation agent to the electrode active material is within the above appropriate range, an appropriate amount of active lithium ions can be embedded in the electrode active material. Therefore, during the battery formation process, the electrode material can release an appropriate amount of active lithium ions to compensate for the active lithium ions lost during the first charge-discharge cycle.

In some embodiments, the volume distribution particle size Dv50 of the electrode active material may be 0.5 µm to 40 µm, 0.5 µm to 30 µm, 0.5 µm to 20 µm, 0.5 µm to 15 µm, 2.5 µm to 35 µm, 2.5 µm to 25 µm, 2.5 µm to 15 µm, 2.5 µm to 10 µm, 4.5 µm to 37.5 µm, 4.5 µm to 27.5 µm, 4.5 µm to 17.5 µm, 4.5 µm to 15 µm, 4.5 µm to 12.5 µm, or the like.

Without being bound by any theory or explanation, when the volume distribution particle size Dv50 of the electrode active material is within the above appropriate range, the prepared electrode material not only provides appropriate lithium ion transport pathways but also exhibits good electrolyte solution wettability. This facilitates the release of active lithium ions from the electrode material, improves the lithium supplementation efficiency of the electrode material, and consequently helps further mitigate capacity degradation and extend the cycle life of the secondary battery.

The volume distribution particle size Dv50 of the electrode active material can be measured using the test method for the volume distribution particle size Dv50 of the electrode material.

In some embodiments, the reactant may include at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus. Optionally, the reactant may include at least one of carbon dioxide, fluorine, nitrogen, sulfur dioxide, or red phosphorus.

A reactant selected from the above types may react with the liquid-phase lithiation agent and/or the pre-lithiated electrode active material. With an appropriate reactant selected, the composition of the first inorganic lithium compound layer can be regulated. The first inorganic lithium compound layer with a suitable composition is advantageous for suppressing side reactions between the substrate and air, maintaining high lithium supplementation efficiency of the electrode material, and regulating the composition of the protective film on the electrode surface so as to enhance the environmental stability of the electrode, thereby helping further improve the cycle stability and extend the cycle life of the secondary battery.

The contact between the above reactants and the pre-lithiated electrode active material can be achieved in various ways, and this is not limited in this application. In some embodiments, when the reactant is a gas, the reactant can be directly introduced into the slurry obtained from step S120. In some embodiments, when the reactant is a solid, the reactant can be dissolved in an organic solvent to obtain a reactant solution, and the reactant solution is then mixed uniformly with the slurry obtained from step S120. This allows for more uniform and sufficient contact between the reactant and the pre-lithiated electrode active material, facilitating the smooth progress of the reaction. The organic solvent may include at least one of alkanes, aromatic hydrocarbons, ethers, esters, and their halogenated derivatives, for example, including at least one of benzene, dimethyl carbonate, ethylene carbonate, fluorinated ethylene carbonate, tetrahydrofuran, dimethyl ether, hydrofluoroether, or 1,1,1,3,3,3-hexafluoroisopropyl methyl ether. A mass fraction of the reactant in the reactant solution may be 0.1% to 20%.

In some embodiments, the preparation method may further include: drying the electrode material.

The drying atmosphere is not limited in this application, and may include any atmosphere that does not cause side reactions with the electrode material. In some embodiments, the drying atmosphere may include nitrogen, argon, dry air, or a combination thereof. Optionally, in some embodiments, the drying atmosphere may include nitrogen, argon, or a combination thereof. The drying temperature and time are not limited in this application, and those skilled in the art can adjust as needed. In some embodiments, the drying temperature may be 0°C to 200°C, optionally 20°C to 120°C, and the drying time may be 5 min to 6 h. Therefore, the chemical stability of the electrode material can be enhanced.

### Electrode Plate

According to a third aspect, embodiments of this application provide an electrode plate, including a current collector and an electrode film layer located on at least one side of the current collector, where the electrode film layer includes an electrode material; the electrode material includes a substrate and a first inorganic lithium compound layer, the first inorganic lithium compound layer coated on at least a portion of the surface of the substrate, the substrate including a pre-lithiated electrode active material, and the first inorganic lithium compound layer including at least one of lithium oxide, lithium nitride, lithium carbonate, lithium fluoride, lithium sulfide, or lithium phosphide.

The electrode plate of the third aspect includes an electrode material, and the substrate of the electrode material has been pre-intercalated with a quantity of active lithium ions. During the first charge or discharge process, the electrode material can release active lithium ions, thereby compensating for the loss of active lithium ions during the battery formation process. In addition, a dense, uniform, and stable protective film can be formed on the surface of the electrode plate through the first inorganic lithium compound layer of the electrode material. This protective film functions similarly to an SEI film, enhancing the environmental stability of the electrode, reducing irreversible loss of active lithium ions, and mitigating capacity degradation of the secondary battery. Therefore, when applied to secondary batteries, the electrode plate in the embodiments of this application can enhance the energy density and extend the cycle life of the secondary battery.

It should be noted that in the embodiments of this application, the structure of the electrode material in the electrode film layer can be determined using devices and methods known in the art. In an example, the structure of the electrode material can be obtained by testing in the following method: obtaining an electrode plate (when sampling from a battery, the battery can be directly disassembled, and the electrode plate removed and dried); randomly selecting a region subjected to argon ion cross-sectional polishing, and taking a transmission electron microscope (TEM) image of the electrode film layer at a magnification of 3000 times or higher (for example, 3000 times, 30000 times, 100000 times, or 500000 times); and processing the TEM image and adjusting to an appropriate contrast, thereby observing the substrate and the first inorganic lithium compound layer of the electrode material. The thickness of the first inorganic lithium compound layer may alternatively be measured from the TEM image.

It should be noted that in embodiments of this application, the volume distribution particle size Dv50 of the electrode material in the electrode film layer may be determined using devices and methods known in the art. In an example, the Dv50 may be obtained by testing in the following method: obtaining an electrode plate (when sampling from a battery, the battery can be directly disassembled, and the electrode plate removed and dried); randomly selecting a region subjected to argon ion cross-sectional polishing, and taking a scanning electron microscope (SEM) image of the electrode film layer at a magnification of 500 times or higher (for example, 500 times, 1000 times, or 5000 times); and processing the SEM image, and adjusting to an appropriate contrast, thereby observing the electrode material. The volume distribution particle size Dv50 of the electrode material can be determined by statistically analyzing the particle sizes of the electrode material in the field of view.

In some embodiments, the electrode plate may further include a second inorganic lithium compound layer adhered to at least a portion of the surface of the electrode film layer. The second inorganic lithium compound layer includes at least one of lithium oxide, lithium nitride, lithium carbonate, lithium fluoride, lithium sulfide, or lithium phosphide.

In the embodiments, the second inorganic lithium compound layer may be a distinct layered structure formed independently on at least a portion of the surface of the electrode film layer.

In some embodiments, the composition of the second inorganic lithium compound layer may be the same as that of the first inorganic lithium compound layer.

Without being bound by any theory or explanation, when the electrode plate further includes a second inorganic lithium compound layer adhered to at least a portion of the surface of the electrode film layer, it is advantageous for further enhancing the environmental stability of the electrode during charge-discharge cycles, thereby contributing to improving the cycle stability of the secondary battery.

In some embodiments, based on a total mass of the first inorganic lithium compound layer, the first inorganic lithium compound layer may include 0 to 80% lithium oxide, 0 to 100% lithium carbonate, 0 to 100% lithium fluoride, 0 to 45% lithium phosphide, 0 to 90% lithium nitride, and 0 to 55% lithium sulfide.

Optionally, in some embodiments, based on the total mass of the first inorganic lithium compound layer, the first inorganic lithium compound layer may include 0 to 100% lithium fluoride, 0 to 80% lithium oxide, 0 to 50% lithium nitride, 0 to 100% lithium carbonate, and 0 to 55% lithium sulfide.

In some embodiments, the first inorganic lithium compound layer may include at least two of lithium oxide, lithium nitride, lithium carbonate, lithium fluoride, or lithium sulfide.

Optionally, in some embodiments, based on the total mass of the first inorganic lithium compound layer, the first inorganic lithium compound layer may include 18% to 90% lithium nitride, 0 to 28% lithium fluoride, 0 to 80% lithium oxide, 0 to 2% lithium carbonate, and 0 to 20% lithium sulfide.

More optionally, in some embodiments, based on the total mass of the first inorganic lithium compound layer, the first inorganic lithium compound layer may include 70% to 90% lithium nitride, 0 to 30% lithium oxide, and 0 to 10% lithium sulfide.

The first inorganic lithium compound layer with the above composition is advantageous for protecting the substrate and suppressing side reactions between the substrate and air, thereby allowing the electrode material to maintain a high lithium supplementation efficiency. In addition, the first inorganic lithium compound layer with the above composition facilitates the formation of a uniform, dense, and stable protective film on the surface of the electrode plate, further improving the cycle stability of the secondary battery.

In some embodiments, based on the total mass of the second inorganic lithium compound layer, the second inorganic lithium compound layer may include 0 to 80% lithium oxide, 0 to 100% lithium carbonate, 0 to 100% lithium fluoride, 0 to 45% lithium phosphide, 0 to 90% lithium nitride, and 0 to 55% lithium sulfide.

Optionally, in some embodiments, based on the total mass of the second inorganic lithium compound layer, the second inorganic lithium compound layer may include 0 to 100% lithium fluoride, 0 to 80% lithium oxide, 0 to 50% lithium nitride, 0 to 100% lithium carbonate, and 0 to 55% lithium sulfide.

In some embodiments, the second inorganic lithium compound layer may include at least two of lithium oxide, lithium nitride, lithium carbonate, lithium fluoride, or lithium sulfide.

Optionally, in some embodiments, based on the total mass of the second inorganic lithium compound layer, the second inorganic lithium compound layer may include 18% to 90% lithium nitride, 0 to 28% lithium fluoride, 0 to 80% lithium oxide, 0 to 2% lithium carbonate, and 0 to 20% lithium sulfide.

More optionally, in some embodiments, based on the total mass of the second inorganic lithium compound layer, the second inorganic lithium compound layer may include 70% to 90% lithium nitride, 0 to 30% lithium oxide, and 0 to 10% lithium sulfide.

The electrode plate of embodiments of this application may be a positive electrode plate or a negative electrode plate. When the electrode plate is a positive electrode plate, the electrode material is a positive electrode material. When the electrode plate is a negative electrode plate, the electrode material is a negative electrode material.

In some embodiments, the electrode plate is a positive electrode plate, and the electrode material is a positive electrode material. The electrode film layer may further include other positive electrode active materials.

Optionally, in some embodiments, based on the total mass of the positive electrode film layer, the mass percentage content of the positive electrode material is 15 wt% to 98 wt%, optionally 50 wt% to 98 wt%. The mass percentage content of other positive electrode active materials is less than or equal to 95 wt%.

In some embodiments, the electrode plate is a negative electrode plate, and the electrode material is a negative electrode material. The electrode film layer may further include other negative electrode active materials.

Optionally, in some embodiments, based on the total mass of the negative electrode film layer, the mass percentage content of the negative electrode material may be 10 wt% to 98 wt%, optionally 50 wt% to 98 wt%. The mass percentage content of other negative electrode active materials may be less than or equal to 95 wt%.

In the electrode film layer, the electrode material with a mass percentage content within the above appropriate range can release an appropriate amount of active lithium ions to compensate for the loss of active lithium ions during the first charge-discharge cycle, while reducing the risk of lithium precipitation due to excessive lithium supplementation, thereby enabling the secondary battery to achieve both good cycling performance and high reliability.

The other positive electrode active materials may include positive electrode active materials of the same type as the pre-lithiated positive electrode active material or those of different types. The other negative electrode active materials may include negative electrode active materials of the same type as the pre-lithiated negative electrode active material or those of different types. The embodiments of the electrode active materials have been described in detail above and will not be repeated here.

In some embodiments, the electrode plate is a positive electrode plate, and the lithium supplementation content of the positive electrode plate may be 1% to 30%.

The lithium supplementation content of the positive electrode plate may be characterized by (C₃ - C₃₀)/C₃₀ × 100%, where C₃ is the actual specific capacity of the positive electrode active substance contained in the positive electrode plate in mAh/g; and C₃₀ is the theoretical specific capacity of the non-pre-lithiated positive electrode active substance in mAh/g. The positive electrode active substance may include the positive electrode material and other positive electrode active materials contained in the positive electrode plate.

The lithium supplementation content of the positive electrode plate may be measured using methods and devices known in the art. C₃ may be measured by referring to the test method for the actual specific capacity C₁ of the positive electrode material, and will not be elaborated here. The theoretical specific capacity C₃₀ of the non-pre-lithiated positive electrode active substance may be determined based on the type, chemical composition, and content of the positive electrode active substance. In an example, if the positive electrode active substance includes m₃ g of a first positive electrode active material and m₄ g of the positive electrode material, where the substrate of the positive electrode material is a pre-lithiated second positive electrode active material, the theoretical specific capacity C₃₀ of the non-pre-lithiated positive electrode active substance is calculated as [m₃/(m₃ + m₄)] × C₃₁ + [m₄/(m₃ + m₄)] × C₃₂, where C₃₁ is the theoretical specific capacity of the first positive electrode active material in mAh/g; and C₃₂ is the theoretical specific capacity of the second positive electrode active material in mAh/g.

In some embodiments, the electrode plate is a negative electrode plate, and the lithium supplementation content of the negative electrode plate may be 1% to 50%. Optionally, the lithium supplementation content of the negative electrode plate may be 30% to 50%.

The lithium supplementation content of the negative electrode plate may be characterized by (C₄₀ - C₄)/C₄₀ × 100%, where C₄ is the actual specific capacity of the negative electrode active substance contained in the negative electrode plate in mAh/g; and C₄₀ is the theoretical specific capacity of the non-pre-lithiated negative electrode active substance in mAh/g. The negative electrode active substance may include the negative electrode material and other negative electrode active materials contained in the negative electrode plate.

The lithium supplementation content of the negative electrode plate may be measured using methods and devices known in the art. C₄ may be measured by referring to the test method for the actual specific capacity C₂ of the negative electrode material, and will not be elaborated here. The theoretical specific capacity C₄₀ of the non-pre-lithiated negative electrode active substance may be determined based on the type, chemical composition, and content of the negative electrode active substance. The determination process for C₄₀ is similar to that for C₃₀ and will not be elaborated here.

When applied to secondary batteries, the electrode plate with a lithium supplementation content meeting the given range can release an appropriate amount of active lithium ions, compensating for the loss of active lithium ions during the first charge-discharge cycle, while reducing the risk of lithium precipitation due to excessive lithium supplementation. Therefore, when applied to a secondary battery, the electrode plate enables the secondary batteries to achieve both good cycling performance and high reliability.

### Preparation method of electrode plate

According to a fourth aspect, embodiments of this application provide a preparation method for an electrode plate, which may include Method A or Method B.

Method A may include the following steps S210 to S240.

S210: Mixing lithium metal with a complexing agent solution to allow the lithium metal to react with the complexing agent, obtaining a liquid-phase lithiation agent.

S220: Contacting the liquid-phase lithiation agent with an electrode active material to allow the liquid-phase lithiation agent to pre-lithiate the electrode active material, obtaining a pre-lithiated electrode active material.

S230: Contacting the pre-lithiated electrode active material with a reactant to form a first inorganic lithium compound layer on at least a portion of the surface of the pre-lithiated electrode active material, obtaining the electrode material; where the electrode material includes: a substrate, the substrate including the pre-lithiated electrode active material; and a first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide.

S240: Preparing an electrode plate including the electrode material.

The implementation of steps S210 to S230 may be the same as steps S110 to S130. The implementation of steps S110 to S130 has been described in detail above and will not be repeated here. Step S240 may be achieved using methods well known in the art, which is not limited herein.

The electrode plate prepared according to Method A includes an electrode material, and the substrate of the electrode material has been pre-intercalated with a quantity of active lithium ions. During the first charge or discharge process, the electrode material can release active lithium ions, thereby compensating for the loss of active lithium ions during the battery formation process. In addition, a dense, uniform, and stable protective film can be formed on the surface of the electrode plate through the first inorganic lithium compound layer of the electrode material. This protective film functions similarly to an SEI film, enhancing the environmental stability of the electrode, reducing irreversible loss of active lithium ions, and mitigating capacity degradation of the secondary battery. Thus, when applied to secondary batteries, the electrode plate prepared in the embodiments of this application can enhance the energy density and extend the cycle life of the secondary battery.

In some embodiments, Method A may further include: providing a complexing agent solution by mixing the complexing agent with a solvent uniformly to obtain the complexing agent solution.

In some embodiments, the complexing agent may include at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups. Optionally, in some embodiments, the complexing agent may include at least one of 2-methylnaphthalene, 1-naphthonitrile, 2,2-dimethylbiphenyl, 2-ethylindene, 1-methyl-3-ethylpyrene, benzophenone, pyridine, or quinoline.

In some embodiments, the solvent may include at least one of alkanes and their derivatives, aromatic hydrocarbons and their derivatives, ether compounds and their derivatives, furan compounds and their derivatives, pyran compounds and their derivatives, or esters and their derivatives. Optionally, the solvent may include at least one of benzene, toluene, xylene, ethylbenzene, ethylene glycol dimethyl ether, 2-methyltetrahydrofuran, pyran, or fluorinated ethylene carbonate.

Without being bound by any theory or explanation, a complexing agent selected from the above types can undergo a complexation reaction with lithium metal to form a liquid-phase lithiation agent with a low redox potential. Therefore, the liquid-phase lithiation agent more readily pre-lithiates the electrode active material by embedding active lithium ions into the electrode active material, thereby facilitating an improvement in the lithium supplementation efficiency of the electrode material. Further, the use of the above types of solvents to dissolve the complexing agent facilitates further adjustment of the redox potential of the liquid-phase lithiation agent within the appropriate range, thereby further improving the pre-lithiation efficiency and, in turn, enhancing the lithium supplementation efficiency of the electrode plate.

In some embodiments, in Method A, a redox potential of the liquid-phase lithiation agent may be 0.05 V to 1.5 V, for example, 0.05 V, 0.10 V, 0.20 V, 0.30 V, 0.40 V, 0.50 V, 0.60 V, 0.70 V, 0.80 V, 0.90 V, 1.0 V, 1.5 V, or a range defined by any two of these values.

Optionally, in some embodiments, in Method A, the redox potential of the liquid-phase lithiation agent may also be 0.1 V to 0.5 V, 0.1 V to 0.4 V, 0.1 V to 0.3 V, 0.1 V to 0.2 V, 0.2 V to 0.5 V, 0.2 V to 0.4 V, 0.2 V to 0.3 V, 0.3 V to 0.5 V, 0.3 V to 0.4 V, 0.4 V to 0.5 V, or the like.

When the redox potential of the liquid-phase lithiation agent is within the above appropriate range, the efficiency of pre-lithiation can be further enhanced, thereby improving the lithium supplementation efficiency of the electrode plate.

In some embodiments, in Method A, a molar ratio of lithium metal to the complexing agent may be (0.5:1) to (10:1), for example, 0.5:1, 1:1, 2:1, 3:1, 4:1, 5:1, 6:1, 7:1, 8:1, 9:1, 10:1, or a range composed of any two of these ratios. Optionally, the molar ratio of lithium metal to the complexing agent may be (1:1) to (4:1), (1:1) to (3.5:1), (1:1) to (3:1), (1:1) to (2.5:1), (1:1) to (2:1), (1:1) to (1.5:1), or the like.

In some embodiments, the content of lithium element in the liquid-phase lithiation agent may be 0.01 mol/L to 10 mol/L, for example, 0.01 mol/L, 0.1 mol/L, 0.5 mol/L, 1 mol/L, 2 mol/L, 5 mol/L, 8 mol/L, 10 mol/L, or a range defined by any two of these values. Optionally, the content of lithium element in the liquid-phase lithiation agent may alternatively be 0.01 mol/L to 5 mol/L, 0.01 mol/L to 4 mol/L, 0.01 mol/L to 3 mol/L, 0.01 mol/L to 2 mol/L, 0.01 mol/L to 1 mol/L, 0.5 mol/L to 5 mol/L, 0.5 mol/L to 3 mol/L, 0.5 mol/L to 1 mol/L, 1 mol/L to 5 mol/L, 2 mol/L to 4 mol/L, or the like.

Without being bound by any theory or explanation, when the molar ratio of lithium metal to the complexing agent is within the above range, not only can the reaction efficiency between lithium metal and the complexing agent be enhanced, but also the content of lithium element in the liquid-phase lithiation agent can be adjusted to an appropriate range. With the content of lithium element in the liquid-phase lithiation agent within the appropriate range, the liquid-phase lithiation agent can achieve improved pre-lithiation efficiency for the electrode active material, thereby improving the lithium supplementation efficiency of the electrode plate.

In some embodiments, in Method A, the molar ratio of lithium element in the liquid-phase lithiation agent to the electrode active material may be (0.05:1) to (10:1), optionally (0.1:1) to (5:1).

Without being bound by any theory or explanation, when the molar ratio of lithium element in the liquid-phase lithiation agent to the electrode active material is within the above appropriate range, an appropriate amount of active lithium ions can be embedded in the electrode active material. Therefore, during the battery formation process, the electrode material can release an appropriate amount of active lithium ions to compensate for the active lithium ions lost during the first charge-discharge cycle.

In some embodiments, in Method A, a volume distribution particle size Dv50 of the electrode active material may be 0.5 µm to 40 µm, 0.5 µm to 30 µm, 0.5 µm to 20 µm, 0.5 µm to 15 µm, 2.5 µm to 35 µm, 2.5 µm to 25 µm, 2.5 µm to 15 µm, 2.5 µm to 10 µm, 4.5 µm to 37.5 µm, 4.5 µm to 27.5 µm, 4.5 µm to 17.5 µm, 4.5 µm to 15 µm, 4.5 µm to 12.5 µm, or the like.

Without being bound by any theory or explanation, when the volume distribution particle size Dv50 of the electrode active material is within the above appropriate range, the prepared electrode material not only provides appropriate lithium ion transport pathways but also exhibits good electrolyte solution wettability. This facilitates the release of active lithium ions from the electrode material, improves the lithium supplementation efficiency of the electrode plate, and consequently helps further mitigate capacity degradation and extend the cycle life of the secondary battery.

In some embodiments, in Method A, the reactant may include at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus. Optionally, the reactant may include at least one of carbon dioxide, fluorine, nitrogen, sulfur dioxide, or red phosphorus.

A reactant selected from the above types may react with the liquid-phase lithiation agent and/or the pre-lithiated electrode active material. With an appropriate reactant selected, the composition of the first inorganic lithium compound layer can be regulated. The first inorganic lithium compound layer with a suitable composition is advantageous for suppressing side reactions between the substrate and air, maintaining high lithium supplementation efficiency of the electrode material, and regulating the composition of the protective film on the electrode surface so as to enhance the environmental stability of the electrode, thereby helping further improve the cycle stability and extend the cycle life of the secondary battery.

The contact between the above reactants and the pre-lithiated electrode active material can be achieved in various ways, and this is not limited in this application. In some embodiments, when the reactant is a gas, the reactant can be directly introduced into the slurry obtained from step S220. In some embodiments, when the reactant is a solid, the reactant can be dissolved in an organic solvent to obtain a reactant solution, and the reactant solution is then mixed uniformly with the slurry obtained from step S220. This allows for more uniform and sufficient contact between the reactant and the pre-lithiated electrode active material, facilitating the smooth progress of the reaction. The organic solvent may include at least one of alkanes, aromatic hydrocarbons, ethers, esters, and their halogenated derivatives, for example, including at least one of benzene, dimethyl carbonate, ethylene carbonate, fluorinated ethylene carbonate, tetrahydrofuran, dimethyl ether, hydrofluoroether, or 1,1,1,3,3,3-hexafluoroisopropyl methyl ether. A mass fraction of the reactant in the reactant solution may be 0.1% to 20%.

In some embodiments, Method A may further include: drying the electrode material.

The drying atmosphere is not limited in this application, and may include any atmosphere that does not cause side reactions with the electrode material. In some embodiments, the drying atmosphere may include nitrogen, argon, dry air, or a combination thereof. Optionally, in some embodiments, the drying atmosphere may include nitrogen, argon, or a combination thereof. The drying temperature and time are not limited in this application, and those skilled in the art can adjust as needed. In some embodiments, the drying temperature may be 0°C to 200°C, optionally 20°C to 120°C, and the drying time may be 5 min to 6 h. Therefore, the chemical stability of the electrode material can be enhanced, thereby improving the chemical stability of the electrode plate.

In some embodiments, step S240 may include the following steps (1) and (2).
(1) Mixing the electrode material, optional other electrode active materials, and optional additives uniformly in an aprotic solvent to obtain an electrode slurry, where the other electrode active materials include other positive electrode active materials or other negative electrode active materials known in the art.
(2) Coating the electrode slurry on at least one side of the current collector, followed by drying and cold pressing to obtain the electrode plate.

In some embodiments, step S240 may include the following steps (3) and (4).
(3) Mixing the electrode material, optional other electrode active materials, and optional additives uniformly to obtain an electrode powder, where the other electrode active materials include other positive electrode active materials or other negative electrode active materials known in the art.
(4) Extruding and rolling the electrode powder into an electrode film, and pressing the electrode film together with the current collector to obtain the electrode plate.

Method B may include the following steps S310 to S340.

S310: Providing an initial electrode plate, the initial electrode plate including a current collector and an electrode film layer located on at least one side of the current collector, the electrode film layer including an electrode active material.

S320: Mixing lithium metal with a complexing agent solution to allow the lithium metal to react with the complexing agent, obtaining a liquid-phase lithiation agent.

In step S320, the lithium metal may be in any form, for example, including at least one of lithium blocks, lithium foils, or lithium powder, which is not limited herein. The complexing agent may include reagents known in the art that are capable of undergoing a complexation reaction with lithium metal, and those skilled in the art can select as needed, which is not limited herein. In some embodiments, the mixing the lithium metal with a complexing agent solution may include mixing the lithium metal with the complexing agent and stirring uniformly. The stirring temperature and time are not specifically limited, and those skilled in the art can adjust as needed. In an example, the stirring temperature may be 0°C to 60°C, optionally 10°C to 40°C, and the stirring time may be 0.1 h to 12 h, optionally 1 h to 6 h.

S330: Contacting the liquid-phase lithiation agent with the electrode film layer to allow the liquid-phase lithiation agent to pre-lithiate the electrode active material, obtaining an electrode plate including the pre-lithiated electrode active material.

In step S330, the contact between the liquid-phase lithiation agent and the electrode film layer can be achieved in various ways, and this is not limited in this application. In some embodiments, the electrode film layer can be immersed in the liquid-phase lithiation agent, or the liquid-phase lithiation agent can be coated on the surface of the electrode film layer to pre-lithiate the electrode active material in the electrode film layer. The coating method may include brushing, curtain coating, roller coating, nitrogen spraying, air spraying, electrostatic spraying, electrophoretic coating, high-pressure airless spraying, and the like, which is not limited herein. The temperature and time for pre-lithiation in step S330 are not specifically limited, and those skilled in the art can adjust as needed. In an example, the pre-lithiation temperature may be 0°C to 80°C, optionally 10°C to 50°C, and the pre-lithiation time may be 1 min to 6 h, optionally 5 min to 30 min.

S340: Contacting the electrode plate including the pre-lithiated electrode active material with a reactant to form a first inorganic lithium compound layer on the surface of the pre-lithiated electrode active material, obtaining an electrode plate including the electrode material; where the electrode material includes: a substrate, the substrate including the pre-lithiated electrode active material; and a first inorganic lithium compound layer coated on at least a portion of the surface of the substrate, the first inorganic lithium compound layer including at least one of lithium oxide, lithium nitride, lithium carbonate, lithium fluoride, lithium sulfide, or lithium phosphide.

In step S340, the reactant may be a substance capable of reacting with the liquid-phase lithiation agent or the pre-lithiated electrode active material to form at least one of lithium oxide, lithium nitride, lithium carbonate, lithium fluoride, lithium sulfide, or lithium phosphide, and those skilled in the art can select as needed. In step S340, after the electrode plate including the pre-lithiated electrode active material contacts the reactant, the reactant may react with the residual liquid-phase lithiation agent on the surface of at least a portion of the pre-lithiated electrode active material or the surface material of the pre-lithiated electrode active material to form the first inorganic lithium compound layer on at least a portion of the surface of the pre-lithiated electrode active material, obtaining an electrode plate including the electrode material.

In some embodiments, the reactant may also react with the residual liquid-phase lithiation agent on the surface of the electrode film layer to form a second inorganic lithium compound layer on at least a portion of the surface of the electrode film layer. The implementation of the second inorganic lithium compound layer has been described in detail above and will not be repeated here. The reaction temperature and time in step S340 are not specifically limited, and those skilled in the art can adjust as needed. In an example, the reaction temperature in step S340 may be 0°C to 80°C, optionally 10°C to 50°C, and the reaction time may be 1 min to 60 min, optionally 2 min to 10 min.

The electrode plate prepared according to Method B includes an electrode material, and the substrate of the electrode material has been pre-intercalated with a quantity of active lithium ions. During the first charge or discharge process, the pre-lithiated electrode active material may release active lithium ions, thereby compensating for the loss of active lithium ions during the battery formation process. In addition, a dense, uniform, and stable protective film can be formed on the surface of the electrode plate through the first inorganic lithium compound layer of the electrode material. This protective film functions similarly to an SEI film, enhancing the environmental stability of the electrode, reducing irreversible loss of active lithium ions, and mitigating capacity degradation of the secondary battery. Therefore, when applied to secondary batteries, the electrode plate prepared in the embodiments of this application can enhance the energy density and extend the cycle life of the secondary battery.

It should be noted that the composition of the electrode film layer in the electrode plate can be regulated by regulating steps S310 to S340. In an example, some or all of the electrode active material can be pre-lithiated by regulating the reaction materials and conditions in step S330. The degree of pre-lithiation of the electrode active material can be also regulated to regulate the lithium supplementation content of the electrode plate by regulating the reaction materials and conditions in step S330. In an example, the first inorganic lithium compound layer can be formed on the surface of some or all of the pre-lithiated electrode active material by regulating the reaction materials and conditions in step S340. In an example, a second inorganic lithium compound layer can be formed on at least a portion of the surface of the electrode plate by regulating the reaction materials and conditions in steps S330 and S340. Those skilled in the art can understand that regardless of the composition of the electrode film layer in the electrode plate, as long as it contains the above electrode material, it falls within the scope of this application.

In some embodiments, Method B may further include: providing a complexing agent solution by mixing the complexing agent with a solvent uniformly to obtain the complexing agent solution.

In some embodiments, the complexing agent may include at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups. Optionally, in some embodiments, the complexing agent may include at least one of 2-methylnaphthalene, 1-naphthonitrile, 2,2-dimethylbiphenyl, 2-ethylindene, 1-methyl-3-ethylpyrene, benzophenone, pyridine, or quinoline.

In some embodiments, the solvent may include at least one of alkanes and their derivatives, aromatic hydrocarbons and their derivatives, ether compounds and their derivatives, furan compounds and their derivatives, pyran compounds and their derivatives, or esters and their derivatives. Optionally, the solvent may include at least one of benzene, toluene, xylene, ethylbenzene, ethylene glycol dimethyl ether, 2-methyltetrahydrofuran, pyran, or fluorinated ethylene carbonate.

Without being bound by any theory or explanation, a complexing agent selected from the above types can undergo a complexation reaction with lithium metal to form a liquid-phase lithiation agent with a low redox potential. Therefore, the liquid-phase lithiation agent more readily pre-lithiates the electrode active material by embedding active lithium ions into the electrode active material, thereby facilitating an improvement in the lithium supplementation efficiency of the electrode plate. Further, the use of the above types of solvents to dissolve the complexing agent facilitates further adjustment of the redox potential of the liquid-phase lithiation agent within the appropriate range, thereby further improving the pre-lithiation efficiency and, in turn, enhancing the lithium supplementation efficiency of the electrode plate.

In some embodiments, in Method B, the redox potential of the liquid-phase lithiation agent may be 0.05 V to 1.5 V, for example, 0.05 V, 0.10 V, 0.20 V, 0.30 V, 0.40 V, 0.50 V, 0.60 V, 0.70 V, 0.80 V, 0.90 V, 1.0 V, 1.5 V, or a range defined by any two of these values.

Optionally, in some embodiments, in Method B, the redox potential of the liquid-phase lithiation agent may alternatively be 0.1 V to 0.5 V, 0.1 V to 0.4 V, 0.1 V to 0.3 V, 0.1 V to 0.2 V, 0.2 V to 0.5 V, 0.2 V to 0.4 V, 0.2 V to 0.3 V, 0.3 V to 0.5 V, 0.3 V to 0.4 V, 0.4 V to 0.5 V, or the like.

When the redox potential of the liquid-phase lithiation agent is within the above appropriate range, the efficiency of pre-lithiation can be further enhanced, thereby improving the lithium supplementation efficiency of the electrode plate.

In some embodiments, in Method B, the molar ratio of lithium metal to the complexing agent may be (0.5:1) to (10:1), for example, 0.5:1, 1:1, 2:1, 3:1, 4:1, 5:1, 6:1, 7:1, 8:1, 9:1, 10:1, or a range composed of any two of these ratios. Optionally, the molar ratio of lithium metal to the complexing agent may be (1:1) to (4:1), (1:1) to (3.5:1), (1:1) to (3:1), (1:1) to (2.5:1), (1:1) to (2:1), (1:1) to (1.5:1), or the like. In some embodiments, the content of lithium element in the liquid-phase lithiation agent may be 0.01 mol/L to 10 mol/L, for example, 0.01 mol/L, 0.1 mol/L, 0.5 mol/L, 1 mol/L, 2 mol/L, 5 mol/L, 8 mol/L, 10 mol/L, or a range defined by any two of these values. Optionally, the content of lithium element in the liquid-phase lithiation agent may alternatively be 0.01 mol/L to 5 mol/L, 0.01 mol/L to 4 mol/L, 0.01 mol/L to 3 mol/L, 0.01 mol/L to 2 mol/L, 0.01 mol/L to 1 mol/L, 0.5 mol/L to 5 mol/L, 0.5 mol/L to 3 mol/L, 0.5 mol/L to 1 mol/L, 1 mol/L to 5 mol/L, 2 mol/L to 4 mol/L, or the like.

Without being bound by any theory or explanation, when the molar ratio of lithium metal to the complexing agent is within the above range, not only can the reaction efficiency between lithium metal and the complexing agent be enhanced, but also the content of lithium element in the liquid-phase lithiation agent can be adjusted to an appropriate range. With the content of lithium element in the liquid-phase lithiation agent within the appropriate range, the liquid-phase lithiation agent can achieve improved pre-lithiation efficiency for the electrode active material, thereby improving the lithium supplementation efficiency of the electrode plate.

In some embodiments, in Method B, the molar ratio of lithium element in the liquid-phase lithiation agent to the electrode active material may be (0.05: 1) to (10:1), optionally (0.1:1) to (5:1).

Without being bound by any theory or explanation, when the molar ratio of lithium element in the liquid-phase lithiation agent to the electrode active material is within the above appropriate range, an appropriate amount of active lithium ions can be embedded in the electrode active material. Therefore, during the battery formation process, the electrode material can release an appropriate amount of active lithium ions to compensate for the active lithium ions lost during the first charge-discharge cycle.

In some embodiments, in Method B, the volume distribution particle size Dv50 of the electrode active material may be 0.5 µm to 40 µm, 0.5 µm to 30 µm, 0.5 µm to 20 µm, 0.5 µm to 15 µm, 2.5 µm to 35 µm, 2.5 µm to 25 µm, 2.5 µm to 15 µm, 2.5 µm to 10 µm, 4.5 µm to 37.5 µm, 4.5 µm to 27.5 µm, 4.5 µm to 17.5 µm, 4.5 µm to 15 µm, 4.5 µm to 12.5 µm, or the like.

Without being bound by any theory or explanation, when the volume distribution particle size Dv50 of the electrode active material is within the above appropriate range, the prepared electrode material not only provides appropriate lithium ion transport pathways but also exhibits good electrolyte solution wettability. This facilitates the release of active lithium ions from the electrode material, improves the lithium supplementation efficiency of the electrode plate, and consequently helps further mitigate capacity degradation and extend the cycle life of the secondary battery.

In some embodiments, in Method B, the reactant may include at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus. Optionally, the reactant may include at least one of carbon dioxide, fluorine, nitrogen, sulfur dioxide, or red phosphorus.

A reactant selected from the above types may react with the pre-lithiated electrode active material. With an appropriate reactant selected, the composition of the first inorganic lithium compound layer can be regulated. The first inorganic lithium compound layer with a suitable composition is advantageous for suppressing side reactions between the substrate and air, maintaining high lithium supplementation efficiency of the electrode plate, and regulating the composition of the protective film on the electrode surface so as to enhance the environmental stability of the electrode, thereby helping further improve the cycle stability and extend the cycle life of the secondary battery.

The contact between the above reactants and the electrode plate including the pre-lithiated electrode active material can be achieved in various ways, and this is not limited in this application. In some embodiments, when the reactant is a gas, the surface of the electrode plate is directly purged with the reactant gas. In some embodiments, when the reactant is a solid, the reactant can be dissolved in an organic solvent to obtain a reactant solution, and the reactant solution is then coated on the surface of the electrode plate. The coating method may include brushing, curtain coating, roller coating, nitrogen spraying, air spraying, electrostatic spraying, electrophoretic coating, high-pressure airless spraying, and the like, which is not limited herein. This allows for more uniform and sufficient contact between the reactant and the surface of the electrode plate, facilitating the smooth progress of the reaction. When the reactant contacts the electrode plate in the form of a reactant solution, the reactant solution can also infiltrate into pores of the electrode film layer, reacting with the pre-lithiated electrode active material inside the electrode film layer, thereby further improving the reaction efficiency. The organic solvent may include at least one of alkanes, aromatic hydrocarbons, ethers, esters, and their halogenated derivatives, for example, including at least one of benzene, dimethyl carbonate, ethylene carbonate, fluorinated ethylene carbonate, tetrahydrofuran, dimethyl ether, hydrofluoroether, or 1,1,1,3,3,3-hexafluoroisopropyl methyl ether. A mass fraction of the reactant in the reactant solution may be 0.1% to 20%.

In some embodiments, Method B may further include: drying the electrode plate.

The drying atmosphere is not limited in this application, and may include any atmosphere that does not cause side reactions with the electrode plate. In some embodiments, the drying atmosphere may include nitrogen, argon, dry air, or a combination thereof. Optionally, in some embodiments, the drying atmosphere may include nitrogen, argon, or a combination thereof. The drying temperature and time are not limited in this application, and those skilled in the art can adjust as needed. In some embodiments, the drying temperature may be 0°C to 200°C, optionally 20°C to 120°C, and the drying time may be 5 min to 6 h. Therefore, the chemical stability of the electrode plate can be enhanced.

### Battery

According to a fifth aspect, embodiments of this application provide a battery. The battery mentioned in the embodiments of this application may include one or more battery cells to provide a single physical module with higher voltage and capacity. When a plurality of battery cells are provided, the battery cells are connected in series, parallel, or series-parallel via a busbar.

The battery cell may be a secondary battery, also known as a rechargeable battery or storage battery, which refers to a battery cell that can be reactivated by charging after discharge to continue use. The secondary battery is not particularly limited in type in this application. For example, the secondary battery may be a lithium-ion battery, a lithium metal battery, or the like. In particular, the secondary battery may be a lithium-ion battery.

Typically, a battery cell includes an electrode assembly and an electrolyte solution, with the electrode assembly including a positive electrode plate, a negative electrode plate, and a separator. The separator is disposed between the positive and negative electrode plates, primarily to prevent short circuits between the positive and negative electrodes while allowing active ions to pass through.

The battery cell in the embodiments of this application includes at least one of the electrode material according to the first aspect, an electrode material prepared by the preparation method according to the second aspect, the electrode plate according to the third aspect, or an electrode plate prepared by the preparation method according to the fourth aspect.

### [Positive electrode plate]

In the battery cell of this application, the positive electrode plate includes a positive electrode current collector and a positive electrode film layer disposed on at least one surface of the positive electrode current collector, the positive electrode film layer including a positive electrode active material. For example, the positive electrode current collector has two opposing surfaces in its thickness direction, and the positive electrode film layer is disposed on either or both of these opposing surfaces.

In some embodiments, the positive electrode plate includes the electrode material according to the first aspect, where the electrode material is a positive electrode material. The embodiments of the electrode material have been described in detail above and will not be repeated here. It can be understood that the battery of this application can achieve the beneficial effects of any of the above embodiments of the electrode material.

In some embodiments, the positive electrode plate includes the electrode material prepared by the method according to the second aspect, where the electrode material is a positive electrode material. The embodiments of the preparation method of the electrode material have been described in detail above and will not be repeated here. It can be understood that the battery of this application can achieve the beneficial effects of any of the above embodiments of the preparation method for an electrode material.

In some embodiments, the positive electrode plate includes the electrode plate according to the third aspect. The embodiments of the electrode plate have been described in detail above and will not be repeated here. It can be understood that the battery of this application can achieve the beneficial effects of any of the above embodiments of the electrode plate.

In some embodiments, the positive electrode plate includes the electrode plate prepared by the preparation method according to the fourth aspect. The embodiments of the preparation method of the electrode plate have been described in detail above and will not be repeated here. It can be understood that the battery of this application can achieve the beneficial effects of any of the above embodiments of the preparation method of the electrode plate.

In some embodiments, the positive electrode current collector may be a metal foil or a composite current collector. For example, aluminum foil may be used as a metal foil. The composite current collector may include a polymer material substrate and a metal layer formed on at least one surface of the polymer material substrate. The composite current collector may be formed by depositing a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode film layer may optionally include a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some embodiments, the positive electrode film layer may optionally include a conductive agent and an optional dispersant. In an example, the conductive agent may include at least one of superconducting carbon, acetylene black, carbon black, Ketjen black, carbon dots, carbon nanotubes, graphene, or carbon nanofibers.

### [Negative electrode plate]

In the battery cell of this application, the negative electrode plate includes a negative electrode current collector and a negative electrode film layer disposed on at least one surface of the negative electrode current collector, the negative electrode film layer including a negative electrode active material. For example, the negative electrode current collector has two opposing surfaces in its thickness direction, and the negative electrode film layer is disposed on either or both of these opposing surfaces.

In some embodiments, the negative electrode plate includes the electrode material according to the first aspect, where the electrode material is a negative electrode material. The embodiments of the electrode material have been described in detail above and will not be repeated here. It can be understood that the battery of this application can achieve the beneficial effects of any of the above embodiments of the electrode material.

In some embodiments, the negative electrode plate includes the electrode material prepared by the method according to the second aspect, where the electrode material is a negative electrode material. The embodiments of the preparation method of the electrode material have been described in detail above and will not be repeated here. It can be understood that the battery of this application can achieve the beneficial effects of any of the above embodiments of the preparation method of the electrode material.

In some embodiments, the negative electrode plate includes the electrode plate according to the third aspect. The embodiments of the electrode plate have been described in detail above and will not be repeated here. It can be understood that the battery of this application can achieve the beneficial effects of any of the above embodiments of the electrode plate.

In some embodiments, the negative electrode plate includes the electrode plate prepared by the preparation method according to the fourth aspect. The embodiments of the preparation method of the electrode plate have been described in detail above and will not be repeated here. It can be understood that the battery of this application can achieve the beneficial effects of any of the above embodiments of the preparation method of the electrode plate.

In some embodiments, the negative electrode current collector may be a metal foil or a composite current collector. For example, as a metal foil, copper foil or aluminum foil may be used. The composite current collector may include a polymer material substrate and a metal layer formed on at least one surface of the polymer material substrate. The composite current collector may be formed by depositing a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode film layer may optionally include a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer may optionally include a conductive agent. The conductive agent may be selected from at least one of superconducting carbon, acetylene black, carbon black, Ketjen black, carbon dots, carbon nanotubes, graphene, or carbon nanofibers.

In some embodiments, the negative electrode film layer may optionally include other additives, such as thickeners (for example, sodium carboxymethyl cellulose (CMC-Na)).

In addition, the negative electrode plate of this application does not exclude other additional functional layers besides the negative electrode film layer. For example, in some embodiments, the negative electrode plate described in this application may further include a conductive undercoating layer (for example, composed of a conductive agent and a binder) disposed between the negative electrode current collector and the negative electrode film layer. In other embodiments, the negative electrode plate described in this application may further include a protective layer covering the surface of the negative electrode film layer.

### [Separator]

The separator is disposed between the positive electrode plate and the negative electrode plate to provide separation. The separator is not limited to any particular type in this application, and any well-known porous separator with good chemical stability and mechanical stability may be used.

In some embodiments, the material of the separator may be selected from at least one of glass fiber, nonwoven fabric, polyethylene, polypropylene, or polyvinylidene fluoride. The separator may be a single-layer film or a multi-layer composite film. When the separator is a multi-layer composite film, the materials of each layer may be the same or different, without particular limitation.

### [Electrolyte]

Generally, the battery cell also includes an electrolyte, which conducts ions between the positive electrode plate and the negative electrode plate. The electrolyte is not specifically limited to any particular type in this application, and may be selected according to requirements. For example, the electrolyte may be liquid, gel, or all-solid-state.

In some embodiments, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

In some embodiments, the electrolyte solution may optionally include additives. For example, the additives may include negative electrode film-forming additives, positive electrode film-forming additives, and additives that improve certain battery performances, such as additives that improve overcharge performance, high-temperature performance, or low-temperature performance of the battery.

In some embodiments, the casing of the battery cell may be a hard casing, such as a hard plastic casing, aluminum casing, or steel casing. The casing of the battery cell may also be a pouch, such as a pouch-type soft package. The material of the soft package may be plastic, including, for example, polypropylene, polybutylene terephthalate, or polybutylene succinate.

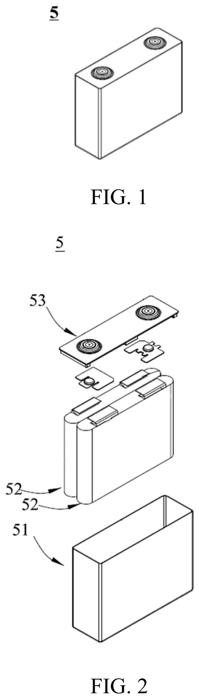

This application does not impose special limitations on the shape of the battery cell, which may be cylindrical, square, or any other shape. For example, FIG. 1 shows a battery cell 5 with a square structure as an example.

In some embodiments, referring to FIG. 2, the casing may include a housing 51 and a cover plate 53. The housing 51 may include a bottom plate and side plates connected to the bottom plate, which together form an accommodating cavity. The housing 51 has an opening communicating with the accommodating cavity, and the cover plate 53 can cover the opening to seal the accommodating cavity. The positive electrode plate, negative electrode plate, and separator can be formed into an electrode assembly 52 through a winding process or a lamination process. The electrode assembly 52 is encapsulated in the accommodating cavity. The electrolyte solution infiltrates the electrode assembly 52. The number of electrode assemblies 52 contained in the battery cell 5 may be one or more, and those skilled in the art can select according to specific requirements.

The preparation method of the battery cell in this application is well-known. In some embodiments, the electrode assembly can be placed in the casing, dried, and then injected with the electrolyte solution, followed by processes such as vacuum encapsulation, standing, formation, and shaping to obtain the battery cell.

In some embodiments, the battery mentioned in this application may be a battery module or a battery pack. The battery module or battery pack generally includes an enclosure for encapsulating one or more battery cells. The enclosure can prevent liquids or other foreign objects from affecting the charging or discharging of the battery cells.

In some embodiments, the battery module or battery pack may include a plurality of battery cells. The plurality of battery cells may be connected in series, parallel, or series-parallel, where being connected in series-parallel means a combination of series and parallel connections of the plurality of battery cells. The plurality of battery cells can be directly connected in series, parallel, or series-parallel and accommodated in the enclosure; alternatively, a plurality of battery cells can first be connected in series, parallel, or series-parallel to form a battery module, and then a plurality of battery modules can be connected in series, parallel, or series-parallel to form an entirety, which is accommodated in the enclosure.

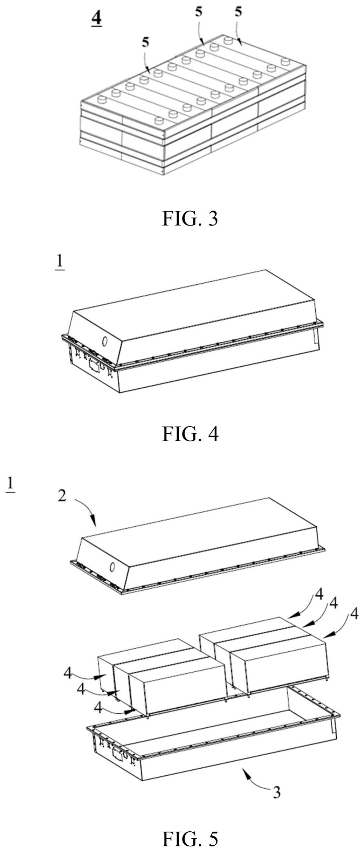

FIG. 3 shows a schematic diagram of a battery module 4 as an example. As shown in FIG. 3, there are a plurality of battery cells 5, and the plurality of battery cells 5 are connected in series, parallel, or series-parallel to form a battery module 4. The plurality of battery cells 5 in a battery module 4 may be electrically connected via a busbar, so that the plurality of battery cells 5 in the battery module 4 are connected in series, parallel, or series-parallel. In the battery module 4, the plurality of battery cells 5 may be arranged sequentially along the length direction of the battery module 4. The secondary batteries may alternatively be arranged in any other manners. Further, the plurality of battery cells 5 may be fixed using fasteners.

In some embodiments, the above battery module may be assembled into a battery pack, and the number of battery modules contained in the battery pack can be adjusted according to the application and capacity of the battery pack.

FIG. 4 and FIG. 5 show a schematic diagram of a battery pack 1 as an example. As shown in FIG. 4 and FIG. 5, the battery pack 1 may include an enclosure and a plurality of battery modules 4 disposed in the enclosure. The plurality of battery modules 4 in the battery pack 1 can be electrically connected via a busbar, so that the plurality of battery modules 4 in the battery pack 1 are connected in series, parallel, or series-parallel. The enclosure includes an upper enclosure 2 and a lower enclosure 3, where the upper enclosure 2 is used to cover the lower enclosure 3, forming a closed space for accommodating the battery modules 4. The plurality of battery modules 4 can be arranged in any manner in the battery enclosure.

### Electric apparatus

This application also provides an electric apparatus, where the electric apparatus includes the battery provided in this application, and the battery is configured to supply electric energy. The battery may serve as the power source or energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like, but is not limited thereto.

As the electric apparatus, the battery cell, battery module containing a plurality of battery cells, or battery pack can be selected based on its usage requirements.

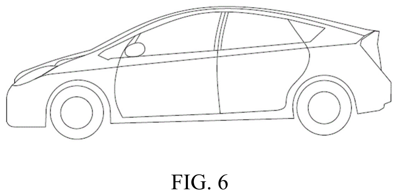

FIG. 6 shows an electric apparatus as an example. The electric apparatus is a pure electric vehicle, hybrid electric vehicle, or plug-in hybrid electric vehicle. To satisfy a requirement of the electric apparatus for high power and high energy density, a battery pack or a battery module may be used.

In another example, the electric apparatus may be a mobile phone, a tablet computer, a notebook computer, or the like. The apparatus usually needs to be light and thin, and may use the battery cell as a power source.

### Examples

The following describes examples of this application. The examples described below are illustrative and intended solely to explain this application, without being construed as limitations thereto. Examples whose technical solutions or conditions are not specified are made in accordance with technical solutions or conditions described in literature in the field or made in accordance with product specifications. The reagents or instruments used are all conventional products that are commercially available if no manufacturer is indicated.

### Example 1

### Preparation of electrode material

Step a: 1 mol of the complexing agent 2-methylbiphenyl was dissolved in 1 L of the solvent tetrahydrofuran, followed by the addition of 1 mol of lithium foil. The resulting mixture was stirred at 25°C for 4 hours to obtain a liquid-phase lithiation agent with a concentration of 1 mol/L, lithium-[2-methylbiphenyl]-tetrahydrofuran.

Step b: The electrode active material silicon monoxide, with a volume distribution particle size Dv¹50 of 10 µm, was added to the liquid-phase lithiation agent obtained in step a. The resulting mixture was stirred under a first reaction condition to obtain a lithiated electrode slurry, where the molar ratio M of lithium element in the liquid-phase lithiation agent to the electrode active material was 5. The first reaction condition was: reaction temperature 25°C, reaction time 6 hours.

Step c: A reactant (a mixed gas of 2% HF, 2% CO₂, 20% O₂, and 76% N₂) was introduced into the lithiated electrode slurry at a flow rate of 0.5 L/min, and the reaction was continued under a second reaction condition: reaction temperature 25°C, reaction time 10 minutes.

Step d: The slurry resulted from the reaction in step c was filtered under reduced pressure and dried at 120°C under normal pressure for 1 hour to obtain an electrode material. The electrode material included a substrate (pre-lithiated silicon monoxide) and a first inorganic lithium compound layer coated on the surface of the substrate. The volume distribution particle size Dv²50 of the electrode material was 15 µm, the thickness d of the first inorganic lithium compound layer was 1 µm, and the first inorganic lithium compound layer included 40% Li₂O, 30% Li₃N, 2% Li₂CO₃, and 28% LiF by mass percentage. The lithium supplementation content of the electrode material, measured by the method described in this application, was determined to be 50%.

### Preparation of positive electrode plate

The positive electrode active material LiFePO₄, conductive agent carbon black, and binder PVDF were mixed in a ratio of 84:8:8, added with the solvent NMP, and together stirred uniformly to obtain a positive electrode slurry. The positive electrode slurry was applied to a carbon-coated aluminum foil, followed by drying, cold pressing, and cutting to obtain a positive electrode plate.

### Preparation of negative electrode plate

The negative electrode active material artificial graphite, the electrode material, conductive agent carbon black, binder SBR, and thickener CMC-Na were mixed in a mass ratio of 87:10:0.5:1.25:1.25, added with the solvent NMP, and together stirred uniformly to obtain a negative electrode slurry. The negative electrode slurry was applied to a copper foil, followed by drying, cold pressing, and cutting to obtain a negative electrode plate.

### Separator

A polypropylene film was used as the separator.

### Preparation of electrolyte solution

LiPF₆ was dissolved in a solvent prepared from ethylene carbonate, ethyl methyl carbonate, and diethyl carbonate in a volume ratio of 1:1:1 to obtain an electrolyte solution with a LiPF₆ concentration of 1 mol/L.

### Preparation of secondary battery

The positive electrode plate, separator, and negative electrode plate were stacked in order to obtain an electrode assembly. The electrode assembly was placed in a package casing, dried, and injected with the electrolyte solution, followed by vacuum encapsulation, standing, formation, and shaping processes to obtain a secondary battery.

### Examples 2 to 15

Based on the preparation process of the electrode material in Example 1, the preparation parameters of the electrode material were adjusted as shown in Table 1 to prepare the electrode materials of Examples 2 to 15. The preparation processes for the positive electrode plate, negative electrode plate, separator, electrolyte solution, and secondary battery in Examples 2 to 15 were the same as those in Example 1.

### Example 16

### Preparation of electrode material

Step a: 0.05 mol of the complexing agent naphthalene was dissolved in 1 L of the solvent 2-methylfuran, followed by the addition of 0.05 mol of lithium foil. The resulting mixture was stirred at 25°C for 4 hours to obtain a liquid-phase lithiation agent with a concentration of 0.05 mol/L, lithium-naphthalene-[2-methylfuran].

Step b: The electrode active material LiFePO₄, with a volume distribution particle size Dv¹50 of 10 µm, was added to the liquid-phase lithiation agent obtained in step a. The resulting mixture was stirred under a first reaction condition to obtain a lithiated electrode slurry, where the molar ratio M of lithium element in the liquid-phase lithiation agent to the electrode active material was 1. The first reaction condition was: reaction temperature 25°C, reaction time 5 minutes.

Step c: A reactant (a mixed gas of 80% O₂ and 20% N₂) was introduced into the lithiated electrode slurry at a flow rate of 0.1 L/min, and the reaction was continued under a second reaction condition: reaction temperature 25°C, reaction time 2 minutes.

Step d: The slurry from step c was filtered under reduced pressure and dried at 120°C under normal pressure for 1 hour to obtain an electrode material. The electrode material included a substrate (pre-lithiated LiFePO₄) and a first inorganic lithium compound layer coated on the surface of the substrate. The volume distribution particle size Dv²50 of the electrode material was 10 µm, the thickness d of the first inorganic lithium compound layer was 80 nm, and the first inorganic lithium compound layer included 30% Li₂O and 70% Li₃N by mass percentage. The lithium supplementation content of the electrode material, measured by the method described in this application, was determined to be 30%.

### Preparation of positive electrode plate

The electrode material, positive electrode active material LiFePO₄, conductive agent carbon black, and binder PVDF were mixed in a ratio of 15:69:8:8, added with the solvent NMP, and together stirred uniformly to obtain a positive electrode slurry. The positive electrode slurry was applied to a carbon-coated aluminum foil, followed by drying, cold pressing, and cutting to obtain a positive electrode plate.

### Preparation of negative electrode plate

The negative electrode active material artificial graphite, negative electrode active material silicon monoxide, conductive agent carbon black, binder SBR, and thickener CMC-Na were mixed in a mass ratio of 67:30:0.5:1.25:1.25, added with the solvent NMP, and together stirred uniformly to obtain a negative electrode slurry. The negative electrode slurry was applied to a copper foil, followed by drying, cold pressing, and cutting to obtain a negative electrode plate.

### Separator

A polypropylene film was used as the separator.

### Preparation of electrolyte solution

LiPF₆ was dissolved in a solvent prepared from ethylene carbonate, ethyl methyl carbonate, and diethyl carbonate in a volume ratio of 1:1:1 to obtain an electrolyte solution with a LiPF₆ concentration of 1 mol/L.

### Preparation of secondary battery

The positive electrode plate, separator, and negative electrode plate were stacked in order to obtain an electrode assembly. The electrode assembly was placed in a package casing, dried, and injected with the electrolyte solution, followed by vacuum encapsulation, standing, formation, and shaping processes to obtain a secondary battery.

### Examples 17 and 18

Based on the preparation process of the electrode material in Example 16, the preparation parameters of the electrode material were adjusted as shown in Table 2 to prepare the electrode materials of Examples 17 and 18. The preparation processes for the positive electrode plate, negative electrode plate, separator, electrolyte solution, and secondary battery in Examples 17 and 18 were the same as those in Example 16.

### Example 19

### Preparation of negative electrode plate

The negative electrode active material (a mixture of artificial graphite and silicon monoxide in a mass ratio of 95:5), conductive agent carbon black, binder SBR, and thickener CMC-Na were mixed in a mass ratio of 97:0.5:1.25:1.25, added with the solvent NMP, and together stirred uniformly to obtain a negative electrode slurry. The negative electrode slurry was applied to a copper foil, followed by drying, cold pressing, and cutting to obtain an initial negative electrode plate.

1 mol of the complexing agent 2-methylbiphenyl was dissolved in 1 L of the solvent tetrahydrofuran, followed by the addition of 1 mol of lithium foil. The resulting mixture was stirred at 25°C for 4 hours to obtain a liquid-phase lithiation agent with a concentration of 1 mol/L, lithium-[2-methylbiphenyl]-tetrahydrofuran.

The initial negative electrode plate was immersed in the liquid-phase lithiation agent, allowing the liquid-phase lithiation agent to react with the negative electrode active material under a first reaction condition to obtain an electrode plate including the pre-lithiated negative electrode active material. The molar ratio M of lithium element in the liquid-phase lithiation agent to the negative electrode active material in the initial negative electrode plate was 0.3, and the first reaction condition was: reaction temperature 40°C, reaction time 20 minutes.

The electrode plate including the pre-lithiated negative electrode active material was placed in a reactant gas stream, and a reactant (a mixed gas of 25% H₂S and 75% N₂) was continuously introduced at a flow rate of 0.22 L/min. The reaction was continued under a second reaction condition: reaction temperature 25°C, reaction time 10 minutes. Subsequently, the electrode plate was dried at 120°C under normal pressure for 1 hour to obtain a negative electrode plate. The negative electrode plate included an electrode material, which included a substrate and a first inorganic lithium compound layer coated on the surface of the substrate. The thickness d of the first inorganic lithium compound layer was 800 nm, and the first inorganic lithium compound layer included 10% Li₂S and 90% Li₃N by mass percentage. The lithium supplementation content of the negative electrode plate, measured by the method described in this application, was determined to be 50%.

The preparation processes for the positive electrode plate, separator, electrolyte solution, and secondary battery in Example 19 were the same as those in Example 1.

### Examples 20 to 32

Based on the preparation process of the negative electrode plate in Example 19, the preparation parameters of the negative electrode plate were adjusted as shown in Table 3 to prepare the negative electrode plates of Examples 20-32. The preparation processes for the positive electrode plate, separator, electrolyte solution, and secondary battery in Examples 20 to 32 were the same as those in Example 19.

### Example 33

### Preparation of positive electrode plate

The positive electrode active material LiFePO₄, conductive agent carbon black, and binder PVDF were mixed in a ratio of 84:8:8, added with the solvent NMP, and together stirred uniformly to obtain a positive electrode slurry. The positive electrode slurry was applied to a carbon-coated aluminum foil, followed by drying, cold pressing, and cutting to obtain an initial positive electrode plate.

0.05 mol of the complexing agent naphthalene was dissolved in 1 L of the solvent 2-methylfuran, followed by the addition of 0.05 mol of lithium foil. The resulting mixture was stirred at 25°C for 4 hours to obtain a liquid-phase lithiation agent with a concentration of 0.05 mol/L, lithium-naphthalene-[2-methylfuran].

The initial positive electrode plate was immersed in the liquid-phase lithiation agent, allowing the liquid-phase lithiation agent to react with the positive electrode active material under a first reaction condition to obtain an electrode plate including the pre-lithiated positive electrode active material. The molar ratio M of lithium element in the liquid-phase lithiation agent to the positive electrode active material in the initial positive electrode plate was 1, and the first reaction condition was: reaction temperature 25°C, reaction time 15 minutes.

The electrode plate including the pre-lithiated positive electrode active material was placed in a reactant gas stream, and a reactant (a mixed gas of 80% O₂ and 20% N₂) was continuously introduced at a flow rate of 1 L/min. The reaction was continued under a second reaction condition: reaction temperature 25°C, reaction time 10 minutes. Subsequently, the electrode plate was dried at 120°C under normal pressure for 1 hour to obtain a positive electrode plate. The positive electrode plate included an electrode material, which included a substrate (pre-lithiated LiFePO₄) and a first inorganic lithium compound layer coated on the surface of the substrate. The thickness d of the first inorganic lithium compound layer was 100 nm, and the first inorganic lithium compound layer included 30% Li₂O and 70% Li₃N by mass percentage. The lithium supplementation content of the positive electrode plate, measured by the method described in this application, was determined to be 30%.

The preparation processes for the negative electrode plate, separator, electrolyte solution, and secondary battery in Example 33 were the same as those in Example 16.

### Examples 34 and 35

Based on the preparation process of the positive electrode plate in Example 33, the preparation parameters of the positive electrode plate were adjusted as shown in Table 4 to prepare the positive electrode plates of Examples 34-35. The preparation processes for the negative electrode plate, separator, electrolyte solution, and secondary battery in Examples 34-35 were the same as those in Example 33.

### Comparative Examples 1 to 3

The preparation processes for the positive electrode plate, negative electrode plate, separator, electrolyte solution, and secondary battery in Comparative Examples 1-3 were the same as those in Example 1, except that the electrode material was replaced with an equal mass of electrode active material, as detailed in Table 1.

### Comparative Example 4

Based on the preparation process of the electrode material in Example 1, the preparation parameters of the electrode material were adjusted as shown in Table 1 to prepare the electrode material of Comparative Example 4. The preparation processes for the positive electrode plate, negative electrode plate, separator, electrolyte solution, and secondary battery in Comparative Example 4 were the same as those in Example 1.

### Comparative Example 5

The preparation processes for the positive electrode plate, negative electrode plate, separator, electrolyte solution, and secondary battery in Comparative Example 5 were the same as those in Example 16, except that the electrode material was replaced with an equal mass of electrode active material, as detailed in Table 2.

### Comparative Example 6

Based on the preparation process of the electrode material in Example 16, the preparation parameters of the electrode material were adjusted as shown in Table 2 to prepare the electrode material of Comparative Example 6. The preparation processes for the positive electrode plate, negative electrode plate, separator, electrolyte solution, and secondary battery in Comparative Example 6 were the same as those in Example 16.

### Comparative Example 7

The preparation processes for the positive electrode plate, separator, electrolyte solution, and secondary battery in Comparative Example 7 were the same as those in Example 19, except that the negative electrode plate was replaced with an initial negative electrode plate to prepare the secondary battery of Comparative Example 7.

### Comparative Example 8

Based on the preparation process of the negative electrode plate in Example 19, the preparation parameters of the negative electrode plate were adjusted as shown in Table 3 to prepare the negative electrode plate of Comparative Example 8. The preparation processes for the positive electrode plate, separator, electrolyte solution, and secondary battery in Comparative Example 8 were the same as those in Example 19.

### Comparative Example 9

The preparation processes for the negative electrode plate, separator, electrolyte solution, and secondary battery in Comparative Example 9 were the same as those in Example 33, except that the positive electrode plate was replaced with an initial positive electrode plate to prepare the secondary battery of Comparative Example 9.

### Comparative Example 10

Based on the preparation process of the positive electrode plate in Example 33, the preparation parameters of the positive electrode plate were adjusted as shown in Table 4 to prepare the positive electrode plate of Comparative Example 10. The preparation processes for the negative electrode plate, separator, electrolyte solution, and secondary battery in Comparative Example 10 were the same as those in Example 33.

The following tests were conducted on Examples 1 to 35 and Comparative Examples 1 to 10, with the test results shown in Tables 1 to 4, respectively.

### Material characterization

### (1) Characterization of Dv¹50

The volume distribution particle size Dv¹50 of the electrode active material was measured according to GB/T 19077-2016 Particle Size Distribution Laser Diffraction Method, using a laser particle size analyzer (Malvern Master Size 3000).

### (2) Characterization of Dv²50

The volume distribution particle size Dv²50 of the electrode material was measured according to GB/T 19077-2016 Particle Size Distribution Laser Diffraction Method, using a laser particle size analyzer (Malvern Master Size 3000).

### (3) Characterization of thickness d of first inorganic lithium compound layer

Examples 1 to 18: The prepared electrode material was dispersed in an ethanol solvent, and the resulting dispersion was dropped onto a microgrid support film, and the thickness d of the first inorganic lithium compound layer in the electrode material was measured using a high-resolution transmission electron microscope (at a magnification of 10,000 to 300,000 times).

Examples 19 to 32: The prepared negative electrode plate was taken; a region was randomly selected, subjected to argon ion cross-sectional polishing, and a transmission electron microscope (TEM) image was taken at a magnification of 30,000 times; the TEM image was processed, with appropriate contrast adjusted, to measure the thickness d of the first inorganic lithium compound layer.

Examples 33 to 35: The prepared positive electrode plate was taken; a region was randomly selected, subjected to argon ion cross-sectional polishing, and a transmission electron microscope (TEM) image was taken at a magnification of 10,000 times; the TEM image was processed, with appropriate contrast adjusted, to measure the thickness d of the first inorganic lithium compound layer.

### (4) Characterization of composition of first inorganic lithium compound layer

Examples 1 to 18: The element types and their contents on the surface of the electrode material were measured using an X-ray photoelectron spectroscopy (XPS) instrument, and the composition of the first inorganic lithium compound layer was determined based on the proportion of the content of each element and the chemical formula of the inorganic lithium compound.

Examples 19 to 32: The prepared negative electrode plate was taken, a region was randomly selected, subjected to cross-sectioning, and a location of the first inorganic lithium compound layer was identified using a scanning electron microscope (SEM) at a magnification of 10,000 times, the location with the first inorganic lithium compound layer was marked as a target region; subsequently, at a magnification of 1,000 times, a 10 µm*10 µm area was selected for EDS surface scanning for 2 minutes to obtain the types and contents of elements in the target region, and the composition of the first inorganic lithium compound layer was determined based on the proportion of the content of each element and the chemical formula of the inorganic lithium compound.

Examples 33 to 35: The prepared positive electrode plate was taken, a region was randomly selected, subjected to cross-sectioning, and a location of the first inorganic lithium compound layer was identified using a scanning electron microscope (SEM) at a magnification of 10,000 times, the location with the first inorganic lithium compound layer was marked as a target region; subsequently, at a magnification of 1,000 times, a 10 µm* 10 µm area was selected for EDS surface scanning for 2 minutes to obtain the types and contents of elements in the target region, and the composition of the first inorganic lithium compound layer was determined based on the proportion of the content of each element and the chemical formula of the inorganic lithium compound.

### Battery performance testing

### (1) First-cycle coulombic efficiency test

At 25°C, the secondary battery was charged at a constant current of 0.1C to 3.65 V, then charged at a constant voltage until the current was less than or equal to 0.05C, and rested for 5 minutes; the charging capacity in this case was recorded as the first charge capacity C₀ (mAh/g). Then, the battery was discharged at a constant current of 0.2C to 2.5 V, and the discharge capacity in this case was recorded as the first discharge capacity Do (mAh/g). The first-cycle coulombic efficiency was calculated as D₀/C₀ × 100%.

### (2) Normal-temperature cycling performance test

At 25°C, the secondary battery after formation was charged at a constant current of 0.2C to 3.65 V, then charged at a constant voltage of 3.65 V until the current was 0.05C, rested for 5 minutes, and discharged at 0.5C to 2.5 V; the resulting capacity was recorded as the initial capacity Cᵢₙᵢₜᵢₐₗ. The above steps were repeated for the same battery, and the discharge capacity C₃₀₀ after the 300th cycle was recorded, with the battery capacity retention rate P₃₀₀ (%) calculated as C₃₀₀/Cᵢₙᵢₜᵢₐₗ × 100%.

### (3) Discharge specific capacity test

At 25°C, the secondary battery after formation was charged at a constant current of 0.2C to 3.65 V, then charged at a constant voltage of 3.65 V until the current was 0.05C, rested for 5 minutes, and discharged at 0.5C to 2.5 V. The above steps were repeated for the same battery, and the discharge capacity C₁₀₀ after the 100th cycle was recorded, with the discharge specific capacity calculated as C₁₀₀/(mass of positive electrode active material + mass of electrode material).

**Table 1**

| Table 1-1 | | | | | | | | | | | | |
|---|---|---|---|---|---|---|---|---|---|---|---|---|
| No. | Electrode active material | Dv¹50/ µm | M | First reaction condition | Reactant | Second reaction condition | Dv²50/µm | d | First inorganic lithium compound layer composition | Lithium supplementation content | First-cycle coulombic efficiency | P₃₀₀ |
| Example 1 | SiO | 10 | 5 | 25°C/6 h | 0.5 L/min; 2% HF + 2% CO₂+ 20% O₂ + 76% N₂ | 25°C/10 min | 15 | 1 µm | 40% Li₂O + 30% Li₃N + 2% Li₂CO₃ + 28% LiF | *50%* | 95.2% | 97.60% |
| Example 2 | SiO | 10 | 5 | 25°C/6 h | 0.1L/min; air | 25°C/60 min | 15 | 1 µm | 80% Li₂O + 18% Li₃N + 2% Li₂CO₃ | *50%* | 94.6% | 96.30% |
| Example 3 | SiO | 10 | 5 | 25°C/6 h | 0.1 L/min; 25% H₂S + 75% N₂ | 25°C/10 min | 15 | 1 µm | 10% Li₂S + 90% Li₃N | *50%* | 94.7% | 95.30% |
| Example 4 | SiO | 10 | 5 | 25°C/6 h | 5 L/min; 2% F₂ + 98% N₂ | 25°C/1 min | 15 | 1 µm | 40% LiF + 60% Li₃N | *50%* | 94.9% | 95.90% |
| Example 5 | SiO | 10 | 5 | 25°C/6 h | [0.4 L/min; 5% O₂ + 95% Ar] + [1 mL/min; 5% S/tetrahydrofuran (THF) solution] | 25°C/5 min | 15 | 1 µm | 60% Li₂O + 40% Li₂S | *50%* | 94.6% | 94.20% |
| Example 6 | SiO | 10 | 5 | 25°C/6 h | [0.2 L/min; air] + [2 mL/min; 5% S/THF solution] | 25°C/10 min | 15 | 1 µm | 60% Li₂O + 20% Li₃N + 20% Li₂S | *50%* | 94.5% | 95.20% |
| Example 7 | SiO | 10 | 5 | 25°C/6 h | 5m L/min; [5% S + 5% P]/THF mixed solution | 25°C/8 min | 15 | 1 µm | 55% Li₂S + 45% Li₃P | *50%* | 94.3% | 94.20% |
| Example 8 | SiO | 10 | 3 | 25°C/1 h | 0.1 L/min; 25% H₂S + 75% N₂ | 25°C/10 min | 14 | 1 µm | 10% Li₂S + 90% Li₃N | 30% | 92.9% | 95.00% |
| Example 9 | SiO | 10 | 1.5 | 25°C/20 min | 0.1 L/min; 25% H₂S + 75% N₂ | 25°C/10 min | 14 | 1 µm | 10% Li₂S + 90% Li₃N | 15% | 91.7% | 94.50% |
| Example 10 | SiO | 10 | 0.1 | 25°C/1 min | 0.1 L/min; 25% H₂S + 75% N₂ | 25°C/10 min | 11 | 1 µm | 10% Li₂S + 90% Li₃N | 1% | 90.3% | 93.80% |
| Example 11 | SiO | 10 | 5 | 25°C/6 h | 0.01 L/min; 25% H₂S + 75% N₂ | 25°C/1 min | 15 | 2 nm | 10% Li₂S + 90% Li₃N | *50%* | 94.1% | 94.60% |
| Example 12 | SiO | 10 | 5 | 25°C/6 h | 0.02 L/min; 25% H₂S + 75% N₂ | 25°C/5 min | 15 | 20 nm | 10% Li₂S + 90% Li₃N | *50%* | 94.8% | 94.90% |
| Example 13 | SiO | 10 | 5 | 25°C/6 h | 0.12 L/min; 25% H₂S + 75% N₂ | 25°C/60 min | 20 | 5 µm | 10% Li₂S + 90% Li₃N | *50%* | 94.5% | 93.70% |
| Comparative Example 1 | SiO | 10 | / | / | / | / | / | / | / | 0 | 90.2% | 93.30% |
| Comparative Example 4 | SiO | 10 | 5 | 25°C/6 h | / | / | / | / | / | 50% | 92.5% | 93.50% |

**Table 1-2**

| No. | Electrode active material | Dv¹50/µm | M | First reaction condition | Reactant | Second reaction condition | Dv²50/µm | d | First inorganic lithium compound layer composition | Lithium supplementation content | First-cycle coulombic efficiency | P₃₀₀ |
|---|---|---|---|---|---|---|---|---|---|---|---|---|
| Example 14 | Sn | 50 | 5 | 25°C/2h | *0.05* L/min; 25% H₂S + 75% N₂ | 25°C/10 min | 60 | 300 nm | 10% Li₂S + 90% Li₃N | 30% | 95.5% | 90.30% |
| Example 15 | P | 10 | 4.7 | 40°C/6h | 0.2 L/min; 25% CO₂ + 75% N₂ | 25°C/10 min | 16 | 800 nm | 10% Li₂CO₃ + 90% Li₃N | 100% | 99.5% | 88.50% |
| Comparative Example 2 | Sn | 50 | / | / | / | / | / | / | / | 0 | 88.5% | 90.10% |
| Comparative Example 3 | P | 10 | / | / | / | / | / | / | / | 0 | 86.0% | 88.20% |

**Table 2**

| No. | Electrode active material | Dv¹5 0/µm | Liquid-phase lithiation agent | M | First reaction condition | Reactant | Second reaction condition | Dv²5 0/µm | d | First inorganic lithium compound layer composition | Lithium supplementation content | Discharg e specific capacity/ (mAh/g) | P₃₀₀ |
|---|---|---|---|---|---|---|---|---|---|---|---|---|---|
| Example 16 | LiFePO₄ | 10 | 0.05 mol/L; Li-naphthalene-[2-methylfuran] | 1 | 25°C/5min | 0.1 L/min; 80% O₂ + 20% N₂ | 25°C/2 min | 10 | 80 nm | 30% Li₂O + 70% Li₃N | 30% | 155.2 | 94.50% |
| Example 17 | LiFePO₄ | 10 | 0.1 mol/L; Li-phenanthrene -ethylene glycol dimethyl ether | 2 | 25°C/10 min | 0.1 L/min; 5% H₂S + 95% N₂ | 25°C/1 min | 10 | 50 nm | 20% Li₂S + 80% Li₃N | 20% | 140.2 | 94.90% |
| Example 18 | LiFePO₄ | 10 | 0.1 mol/L; Li-pyrenepyran | 1.5 | 25°C/1 min | 0.11 L/min; 70% O₂ + 30% N₂ | 25°C/2 min | 10 | 20 nm | 50% Li₂O + 50% Li₃N | 1% | 126.5 | 94.30% |

| No. | Electrode active material | Dv¹5 0/ µm | Liquid-phase lithiation agent | M | First reaction condition | Reactant | Second reaction condition | Dv²5 0/ µm | d | First inorganic lithium compound layer composition | Lithium supplementation content | Discharge specific capacity/ (mAh/g) | P₃₀₀ |
|---|---|---|---|---|---|---|---|---|---|---|---|---|---|
| Comparative Example 5 | LiFePO₄ | 10 | / | / | / | / | / | 10 | / | / | 0 | 125.3 | 93.20% |
| Comparative Example 6 | LiFePO₄ | 10 | 0.1 mol/L; Li-phenanthrene -ethylene glycol dimethyl ether | 2 | / | / | / | 10 | / | / | 20% | 136.7 | 93.80% |

**Table 3**

| No. | M | First reaction condition | Reactant | Second reaction condition | d | First inorganic lithium compound layer composition | Lithium supplementation content | First-cycle coulombic efficiency | P₃₀₀ |
|---|---|---|---|---|---|---|---|---|---|
| Example 19 | 0.3 | 40°C/20 min | 0.22 L/min; 25% H₂S + 75% N₂ | 25°C/10 min | 800 nm | 10% Li₂S + 90% Li₃N | 50% | 96.3% | 97.2% |
| Example 20 | 0.3 | 40°C/20 min | 0.5 L/min; 2% HF + 2% CO₂ + 20% O₂ + 76% N₂ | 25°C/10 min | 800 nm | 40% Li₂O + 30% Li₃N + 2% Li₂CO₃ + 28% LiF | 50% | 95.2% | 97.6% |
| Example 21 | 0.3 | 40°C/20 min | 0.1 L/min; air | 25°C/60 min | 800 nm | 80% Li₂O + 18% Li₃N + 2% Li₂CO₃ | 50% | 94.6% | 96.3% |
| Example 22 | 0.3 | 40°C/20 min | 5 L/min; 2% F₂ + 98% N₂ | 25°C/1 min | 800 nm | 40% LiF + 60% Li₃N | 50% | 94.9% | 95.9% |
| Example 23 | 0.3 | 40°C/20 min | [0.4 L/min; 5% O₂ + 95% Ar] + [1mL/min; 5% S/THF solution] | 25°C/5 min | 800 nm | 60% Li₂O + 40% Li₂S | 50% | 94.6% | 95.2% |
| Example 24 | 0.3 | 40°C/20 min | [0.2 L/min; air] + [2mL/min; 10% S/THF solution] | 25°C/10 min | 800 nm | 60% Li₂O + 20% Li₃N + 20% Li₂S | 50% | 94.5% | 95.7% |
| Example 25 | 0.3 | 40°C/20 min | 5 mL/min; [5% S + 5% P]/THF mixed solution | 25°C/8 min | 800 nm | 55% Li₂S + 45% Li₃P | 50% | 94.3% | 95.3% |
| Example 26 | 0.2 | 40°C/10 min | 0.22 L/min; 25% H₂S + 75% N₂ | 25°C/10 min | 800 nm | 10% Li₂S + 90% Li₃N | 30% | 93.3% | 95.7% |
| Example 27 | 0.1 | 30°C/5min | 0.22 L/min; 25% H₂S + 75% N₂ | 25°C/10 min | 800 nm | 10% Li₂S + 90% Li₃N | 15% | 92.5% | 95.6% |
| Example 28 | 0.05 | 10°C/2min | 0.22 L/min; 25% H₂S + 75% N₂ | 25°C/10 min | 800 nm | 10% Li₂S + 90% Li₃N | 1% | 91.9% | 95.4% |
| Example 29 | 0.3 | 40°C/20 min | 0.01 L/min; 25% H₂S + 75% N₂ | 25°C/1 min | 2 nm | 10% Li₂S + 90% Li₃N | 50% | 95.8% | 95.4% |
| Example 30 | 0.3 | 40°C/20 min | 0.02 L/min; 25% H₂S + 75% N₂ | 25°C/1 min | 20 nm | 10% Li₂S + 90% Li₃N | 50% | 95.9% | 95.8% |
| Example 31 | 0.3 | 40°C/20 min | 0.3 L/min; 25% H₂S + 75% N₂ | 25°C/10 min | 1 µm | 10% Li₂S + 90% Li₃N | 50% | 96.6% | 96.5% |
| Example 32 | 0.3 | 40°C/20 min | 0.12 L/min; 25% H₂S + 75% N₂ | 25°C/60 min | 5 µm | 10% Li₂S + 90% Li₃N | 50% | 95.8% | 95.7% |
| Comparative Example 7 | / | / | / | / | / | / | 0 | 91.5% | 94.5% |
| Comparative Example 8 | 0.3 | 40°C/20 min | / | / | / | / | 50% | 93.3% | 95.0% |

**Table 4**

| No. | Lithiation agent | M | First reaction condition | Reactant | Second reaction condition | d | First inorganic lithium compound layer composition | Lithium supplementation content | Discharge specific capacity (mAh/g) | P₃₀₀ |
|---|---|---|---|---|---|---|---|---|---|---|
| Example 33 | 0.05 mol/L; Li-naphthalene-[2-methylfuran] | 1 | 25°C/15 min | 1 L/min; 80% O₂ + 20% N₂ | 25°C/10 min | 100 nm | 30% Li₂O + 70% Li₃N | 30% | 154.8 | 94.5% |
| Example 34 | 0.05 mol/L; Li-naphthalene-[3-methylfuran] | 0.5 | 25°C/10 min | 1 L/min; 80% O₂ + 20% N₂ | 25°C/10 min | 100 nm | 30% Li₂O + 70% Li₃N | 20% | 140.2 | 94.9% |
| Example 35 | 0.05 mol/L; Li-naphthalene-[4-methylfuran] | 0.01 | 25°C/1 min | 1 L/min; 80% O₂ + 20% N₂ | 25°C/10 min | 100 nm | 30% Li₂O + 70% Li₃N | 1% | 126.5 | 94.3% |
| Comparative Example 9 | / | / | / | / | / | / | / | 0 | 126.3 | 93.0% |
| Comparative Example 10 | 0.05 mol/L; Li-naphthalene-[2-methylfuran] | 1 | 25°C/15 min | / | / | / | / | 30% | 136.2 | 93.5% |

In Tables 1 to 4, the percentage of gaseous components in the reactant refers to the volume fraction of the component in the mixed gas, for example, "25% H₂S + 75% N₂" indicates a gas mixture of H₂S and N₂ in a volume ratio of 25:75. The percentage of solute in the reactant solution refers to the mass percentage concentration of the solute in the solution, for example, "[5% S + 5% P]/THF mixed solution" indicates a mixed solution of S and P in THF, with a mass percentage concentration of 5% for S and 5% for P.

From Tables 1 to 4, it can be seen that the electrode material and electrode plate provided in the embodiments of this application, when applied to secondary batteries, can effectively compensate for the loss of active lithium ions in the secondary battery, thereby improving the cycling performance of the battery.

Based on a comprehensive analysis of Examples 1 to 7, it can be seen that the lithium supplementation efficiency of the electrode material can be controlled by regulating the composition of the first inorganic lithium compound layer, thereby enabling regulation of the cycling performance of the battery. Based on a comprehensive analysis of Example 3 and Examples 8 to 10, it can be seen that, with other conditions held constant, an increase in the lithium supplementation content of the electrode material increases led to the first-cycle coulombic efficiency and the cycling performance of the battery are improved. Based on a comprehensive analysis of Example 3 and Examples 11 to 13, it can be seen that, with other conditions unchanged, regulating the thickness of the first inorganic lithium compound layer within an appropriate range can enhance the lithium supplementation efficiency of the electrode material while improving the cycling performance of the battery.

In contrast, in Comparative Example 1, the electrode material was replaced with an equal mass of silicon monoxide, and the first-cycle coulombic efficiency and cycling performance of the battery were inferior to those in Examples 1 to 13. In Comparative Examples 2 and 3, the electrode material was replaced with an equal mass of tin and phosphorus, respectively, and the first-cycle coulombic efficiency and cycling performance of the battery were also inferior to those in the corresponding Examples 14 and 15. In Comparative Example 4, although pre-lithiated silicon monoxide was used, no first inorganic lithium compound layer was coated on the surface of the pre-lithiated silicon monoxide, thereby resulting in reduced lithium supplementation efficiency and unsatisfactory cycling performance of the battery.

Based on the test results of Examples 16 to 18 in Table 2, it can be seen that pre-lithiating the positive electrode active material and coating its surface with a first inorganic lithium compound layer can effectively compensate for the loss of active lithium ions in the secondary battery. As a result, the secondary battery maintains a high discharge specific capacity after 100 charge-discharge cycles.

In contrast, in Comparative Example 5, the electrode material was replaced with an equal mass of LiFePO₄, and the discharge specific capacity and cycling performance were significantly inferior to those in Examples 16-18. In Comparative Example 6, although pre-lithiated LiFePO₄ was used, no first inorganic lithium compound layer was coated on the surface of the pre-lithiated LiFePO₄, resulting in reduced lithium supplementation efficiency of the pre-lithiated LiFePO₄, leading to a lower discharge specific capacity compared to that in Example 17 and inferior cycling performance compared to those in Examples 16 to 18.

Based on the test results of Table 3, it can be seen that pre-lithiating the negative electrode active material in the negative electrode plate and treating the negative electrode plate with a reactant to include the electrode material can effectively improve the first-cycle coulombic efficiency and cycling performance of the battery.

In contrast, the negative electrode plate in Comparative Example 7 was not pre-lithiated, resulting in significantly lower first-cycle coulombic efficiency and cycling performance compared to those in Examples 19 to 32. In Comparative Example 8, although the negative electrode active material in the negative electrode plate was pre-lithiated, no first inorganic lithium compound layer was formed on the surface of the pre-lithiated negative electrode active material, thereby resulting in lower first-cycle coulombic efficiency compared to those in Examples 19 to 25 and 29 to 32 and inferior cycling performance compared to those in Examples 19 to 32.

Based on test results of Table 4, it can be seen that pre-lithiating the positive electrode active material in the positive electrode plate and treating the positive electrode plate with a reactant to include the electrode material can effectively compensate for the loss of active lithium ions in the secondary battery. As a result, the secondary battery maintains a high discharge specific capacity after 100 charge-discharge cycles.

In contrast, the positive electrode plate in Comparative Example 9 was not pre-lithiated, resulting in significantly lower discharge specific capacity and cycling performance after 100 charge-discharge cycles compared to those in Examples 33 to 35. In Comparative Example 10, although the positive electrode active material in the positive electrode plate was pre-lithiated, no first inorganic lithium compound layer was formed on the surface of the pre-lithiated positive electrode active material, resulting in lower discharge specific capacity after 100 charge-discharge cycles compared to that in Example 33 and inferior cycling performance compared to that in Example 33.

It should be noted that this application is not limited to the above embodiments. The above embodiments are merely exemplary. Any and all embodiments with substantively the same constituents or exerting the same effects as the technical ideas hereof without departing from the scope of the technical solutions of this application still fall within the technical scope of this application. In addition, all kinds of variations of the embodiments conceivable by persons skilled in the art and any other embodiments derived by combining some constituents of the embodiments hereof without departing from the subject-matter of this application still fall within the scope of this application.

## Claims

1. An electrode material, comprising:
a substrate, the substrate comprising a pre-lithiated electrode active material; and
a first inorganic lithium compound layer coated on at least a portion of the surface of the substrate, the first inorganic lithium compound layer comprising at least one of lithium oxide, lithium nitride, lithium carbonate, lithium fluoride, lithium sulfide, or lithium phosphide.

2. The electrode material according to claim 1, wherein the first inorganic lithium compound layer comprises at least two of lithium oxide, lithium nitride, lithium carbonate, lithium fluoride, or lithium sulfide; wherein
optionally, based on a total mass of the first inorganic lithium compound layer, the first inorganic lithium compound layer comprises 18% to 90% lithium nitride, 0 to 28% lithium fluoride, 0 to 80% lithium oxide, 0 to 2% lithium carbonate, and 0 to 20% lithium sulfide; and
more optionally, based on the total mass of the first inorganic lithium compound layer, the first inorganic lithium compound layer comprises 70% to 90% lithium nitride, 0 to 30% lithium oxide, and 0 to 10% lithium sulfide.

3. The electrode material according to claim 1 or 2, wherein a thickness of the first inorganic lithium compound layer is 2 nm to 5000 nm, optionally 20 nm to 1000 nm.

4. The electrode material according to any one of claims 1 to 3, wherein a volume distribution particle size Dv50 of the electrode material is 0.6 µm to 60 µm, optionally 5 µm to 15 µm.

5. The electrode material according to any one of claims 1 to 4, wherein the electrode material is a positive electrode material, and a lithium supplementation content of the positive electrode material is 1% to 30%, optionally 5% to 20%; and
the lithium supplementation content of the positive electrode material is **characterized by** (C₁ - C₁₀)/C₁₀ × 100%, wherein C₁ is the actual specific capacity of the positive electrode material in mAh/g, and C₁₀ is the theoretical specific capacity of the positive electrode active material in mAh/g.

6. The electrode material according to any one of claims 1 to 4, wherein the electrode material is a negative electrode material, and a lithium supplementation content of the negative electrode material is 1% to 100%, optionally 30% to 50%; and
the lithium supplementation content of the negative electrode material is **characterized by** (C₂₀ - C₂)/C₂₀ × 100%, wherein C₂ is the actual specific capacity of the negative electrode material in mAh/g, and C₂₀ is the theoretical specific capacity of the negative electrode active material in mAh/g.

7. A preparation method for an electrode material, comprising:
mixing lithium metal with a complexing agent solution to allow the lithium metal to react with the complexing agent, obtaining a liquid-phase lithiation agent;
contacting the liquid-phase lithiation agent with an electrode active material to allow the liquid-phase lithiation agent to pre-lithiate the electrode active material, obtaining a pre-lithiated electrode active material; and
contacting the pre-lithiated electrode active material with a reactant to form a first inorganic lithium compound layer on at least a portion of the surface of the pre-lithiated electrode active material, obtaining the electrode material;
wherein the electrode material comprises: a substrate, the substrate comprising the pre-lithiated electrode active material; and the first inorganic lithium compound layer coated on at least a portion of the surface of the substrate, the first inorganic lithium compound layer comprising at least one of lithium oxide, lithium nitride, lithium carbonate, lithium fluoride, lithium sulfide, or lithium phosphide.

8. The preparation method according to claim 7, further comprising:
providing the complexing agent solution by mixing the complexing agent with a solvent uniformly to obtain the complexing agent solution; wherein
optionally, the complexing agent comprises at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups, and more optionally comprises at least one of 2-methylnaphthalene, 1-naphthonitrile, 2,2-dimethylbiphenyl, 2-ethylindene, 1-methyl-3-ethylpyrene, or benzophenone; and
optionally, the solvent comprises at least one of alkanes and their derivatives, aromatic hydrocarbons and their derivatives, ether compounds and their derivatives, furan compounds and their derivatives, pyran compounds and their derivatives, or esters and their derivatives, and more optionally comprises at least one of benzene, toluene, xylene, ethylbenzene, ethylene glycol dimethyl ether, 2-methyltetrahydrofuran, pyran, or fluorinated ethylene carbonate.

9. The preparation method according to claim 7 or 8, wherein a redox potential of the liquid-phase lithiation agent is 0.05 V to 1.5 V, optionally 0.1 V to 0.5 V.

10. The preparation method according to any one of claims 7 to 9, wherein a molar ratio of the lithium metal to the complexing agent is (0.5:1) to (10:1), optionally (1:1) to (4:1); and/or
a molar concentration of lithium element in the liquid-phase lithiation agent is 0.01 mol/L to 10 mol/L, optionally 0.01 mol/L to 5 mol/L; and/or,
a molar ratio of lithium element in the liquid-phase lithiation agent to the electrode active material is (0.05:1) to (10:1), optionally (0.1:1) to (5:1);
and/or, the volume distribution particle size Dv50 of the electrode active material is 0.5 µm to 40 µm.

11. The preparation method according to any one of claims 7 to 10, wherein
the reactant comprises at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus, and optionally comprises at least one of carbon dioxide, fluorine, nitrogen, sulfur dioxide, or red phosphorus.

12. An electrode plate, comprising a current collector and an electrode film layer located on at least one side of the current collector, wherein the electrode film layer comprises an electrode material; and
the electrode material comprises:
a substrate, the substrate comprising a pre-lithiated electrode active material; and
a first inorganic lithium compound layer coated on at least a portion of the surface of the substrate, the first inorganic lithium compound layer comprising at least one of lithium oxide, lithium nitride, lithium carbonate, lithium fluoride, lithium sulfide, or lithium phosphide.

13. The electrode plate according to claim 12, further comprising a second inorganic lithium compound layer adhered to at least a portion of the surface of the electrode film layer, the second inorganic lithium compound layer comprising at least one of lithium oxide, lithium nitride, lithium carbonate, lithium fluoride, lithium sulfide, or lithium phosphide.

14. The electrode plate according to claim 12 or 13, wherein:
the first inorganic lithium compound layer comprises at least two of lithium oxide, lithium nitride, lithium carbonate, lithium fluoride, or lithium sulfide; wherein
optionally, based on a total mass of the first inorganic lithium compound layer, the first inorganic lithium compound layer comprises 18% to 90% lithium nitride, 0 to 28% lithium fluoride, 0 to 80% lithium oxide, 0 to 2% lithium carbonate, and 0 to 20% lithium sulfide; and
more optionally, based on the total mass of the first inorganic lithium compound layer, the first inorganic lithium compound layer comprises 70% to 90% lithium nitride, 0 to 30% lithium oxide, and 0 to 10% lithium sulfide.

15. A preparation method for an electrode plate, comprising:
Method A:
mixing lithium metal with a complexing agent solution to allow the lithium metal to react with the complexing agent, obtaining a liquid-phase lithiation agent;
contacting the liquid-phase lithiation agent with an electrode active material to allow the liquid-phase lithiation agent to pre-lithiate the electrode active material, obtaining a pre-lithiated electrode active material;
contacting the pre-lithiated electrode active material with a reactant to form a first inorganic lithium compound layer on at least a portion of the surface of the pre-lithiated electrode active material, obtaining the electrode material;
wherein the electrode material comprises: a substrate, the substrate comprising the pre-lithiated electrode active material; and the first inorganic lithium compound layer coated on at least a portion of the surface of the substrate, the first inorganic lithium compound layer comprising at least one of lithium oxide, lithium nitride, lithium carbonate, lithium fluoride, lithium sulfide, or lithium phosphide; and
preparing an electrode plate comprising the electrode material; or
Method B:
providing an initial electrode plate, the initial electrode plate comprising a current collector and an electrode film layer located on at least one side of the current collector, the electrode film layer comprising an electrode active material;
mixing lithium metal with a complexing agent solution to allow the lithium metal to react with the complexing agent, obtaining a liquid-phase lithiation agent;
contacting the liquid-phase lithiation agent with the electrode film layer to allow the liquid-phase lithiation agent to pre-lithiate the electrode active material, obtaining an electrode plate comprising the pre-lithiated electrode active material; and
contacting the electrode plate comprising the pre-lithiated electrode active material with a reactant to form a first inorganic lithium compound layer on the surface of the pre-lithiated electrode active material, obtaining an electrode plate comprising the electrode material;
wherein the electrode material comprises: a substrate, the substrate comprising the pre-lithiated electrode active material; and a first inorganic lithium compound layer coated on at least a portion of the surface of the substrate, the first inorganic lithium compound layer comprising at least one of lithium oxide, lithium nitride, lithium carbonate, lithium fluoride, lithium sulfide, or lithium phosphide.

16. The preparation method according to claim 15, wherein Method A and/or Method B further comprises:
providing the complexing agent solution by mixing the complexing agent with a solvent uniformly to obtain the complexing agent solution; wherein
optionally, the complexing agent comprises at least one of naphthalene and its derivatives, biphenyl and its derivatives, phenanthrene and its derivatives, pyrene and its derivatives, fluorene and its derivatives, indene and its derivatives, or aromatic hydrocarbon derivatives containing heteroatom functional groups, and more optionally comprises at least one of 2-methylnaphthalene, 1-naphthonitrile, 2,2-dimethylbiphenyl, 2-ethylindene, 1-methyl-3-ethylpyrene, or benzophenone; and
optionally, the solvent comprises at least one of alkanes and their derivatives, aromatic hydrocarbons and their derivatives, ether compounds and their derivatives, furan compounds and their derivatives, pyran compounds and their derivatives, or esters and their derivatives, and more optionally comprises at least one of benzene, toluene, xylene, ethylbenzene, ethylene glycol dimethyl ether, 2-methyltetrahydrofuran, pyran, or fluorinated ethylene carbonate.

17. The preparation method according to claim 15 or 16, wherein in Method A and/or Method B, the redox potential of the liquid-phase lithiation agent is 0.05 V to 1.5 V, optionally 0.1 V to 0.5 V.

18. The preparation method according to any one of claims 15 to 17, wherein in Method A and/or Method B:
a molar ratio of the lithium metal to the complexing agent is (0.5:1) to (10:1), optionally (1:1) to (4:1); and/or,
a molar concentration of lithium element in the liquid-phase lithiation agent is 0.01 mol/L to 10 mol/L, optionally 0.01 mol/L to 5 mol/L; and/or,
a molar ratio of lithium element in the liquid-phase lithiation agent to the electrode active material is (0.05:1) to (10:1), optionally (0.1:1) to (5:1); and/or,
a volume distribution particle size Dv50 of the electrode active material is 0.5 µm to 40 µm.

19. The preparation method according to any one of claims 15 to 18, wherein in Method A and/or Method B:
the reactant comprises at least one of air, water, oxygen, carbon dioxide, nitrogen, nitric oxide, nitrogen dioxide, dinitrogen pentoxide, hydrogen fluoride, fluorine, sulfur, hydrogen sulfide, sulfur dioxide, sulfur trioxide, or red phosphorus, and optionally comprises at least one of carbon dioxide, fluorine, nitrogen, sulfur dioxide, or red phosphorus.

20. A battery, comprising at least one of the electrode material according to any one of claims 1 to 6, the electrode material prepared by the preparation method according to any one of claims 7 to 11, the electrode plate according to any one of claims 12 to 14, or the electrode plate prepared by the preparation method according to any one of claims 15 to 19.

21. A electric apparatus, comprising the battery according to claim 20.
